(19) Europäisches Patentamt / European Patent Office / Office européen des brevets

(11) **EP 3 637 695 B1**

(12) **EUROPEAN PATENT SPECIFICATION**

(45) Date of publication and mention
of the grant of the patent:
**23.03.2022 Bulletin 2022/12**

(21) Application number: **17916034.6**

(22) Date of filing: **30.06.2017**

(51) International Patent Classification (IPC):
**H04L 12/46** (2006.01)    **H04L 12/64** (2006.01)
**H04L 12/709** (2013.01)   **H04L 12/803** (2013.01)
**H04W 76/22** (2018.01)    **H04W 8/08** (2009.01)

(52) Cooperative Patent Classification (CPC):
**H04L 12/4633; H04L 12/6418; H04L 45/245;**
**H04L 47/125; H04W 76/22;** H04W 76/15

(86) International application number:
**PCT/CN2017/091232**

(87) International publication number:
**WO 2019/000419 (03.01.2019 Gazette 2019/01)**

(54) **MESSAGE TRANSMISSION METHOD, APPARATUS AND SYSTEM**

NACHRICHTENÜBERTRAGUNGSVERFAHREN, VORRICHTUNG UND SYSTEM

PROCÉDÉ, APPAREIL ET SYSTÈME DE TRANSMISSION DE MESSAGE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**15.04.2020 Bulletin 2020/16**

(73) Proprietor: **Huawei Technologies Co., Ltd.**
**Longgang**
**Shenzhen, Guangdong 518129 (CN)**

(72) Inventors:
• **CHEN, Da**
**Shenzhen**
**Guangdong 518129 (CN)**
• **ZHANG, Dongxia**
**Shenzhen**
**Guangdong 518129 (CN)**
• **SONG, Liangyu**
**Shenzhen**
**Guangdong 518129 (CN)**
• **HUANG, Jun**
**Shenzhen**
**Guangdong 518129 (CN)**
• **ZHANG, Sai**
**Shenzhen**
**Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A1- 2 728 802**    **WO-A1-2016/090978**
**CN-A- 105 657 748**   **CN-A- 105 743 760**
**CN-A- 106 304 397**

• **LEYMANN C HEIDEMANN DEUTSCHE TELEKOM AG M ZHANG B SARIKAYA HUAWEI M CULLEN PAINLESS SECURITY N: "Huawei's GRE Tunnel Bonding Protocol; rfc8157.txt", HUAWEI'S GRE TUNNEL BONDING PROTOCOL; RFC8157.TXT, INTERNET ENGINEERING TASK FORCE, IETF; STANDARD, INTERNET SOCIETY (ISOC) 4, RUE DES FALAISES CH- 1205 GENEVA, SWITZERLAND, 6 May 2017 (2017-05-06), pages 1-44, XP015119456, [retrieved on 2017-05-06]**
• **LEYMANN, N. et al.: "GRE Notifications for Hybrid Accessdraft-lhwxz-gre-notifications-hybrid -access-00", Interdomain Routing Working Group, Internet -Draft, 27 June 2014 (2014-06-27), pages 1-36, XP055558651,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The invention relates to the communications field, and more specifically, to a packet transmission method, apparatus, and system.

### BACKGROUND

A hybrid access (Hybrid Access) technology is an emerging technology in which bonding (Bonding) is performed on a fixed access network (for example, a digital subscriber line (Digital Subscriber Line, DSL) network) and a mobile access network (for example, a Long Term Evolution (Long Time Evolution, LTE) network) of a terminal user, to expand a user bandwidth. For example, a DSL tunnel and an LTE tunnel between a home gateway (Home gateway, HG) and a hybrid access aggregation point (Hybrid Access Aggregation Point, HAAP) are bonded as one bandwidth connection by using a tunnel binding mechanism, so that uplink traffic and downlink traffic of a user are transmitted through the DSL tunnel and the LTE tunnel, and share bandwidths of the DSL tunnel and the LTE tunnel.

In a current technology, whether a bonding-tunnel transmission mode or a single-tunnel transmission mode (for example, a DSL-only transmission mode) is used is determined by an HG device. After determining a transmission mode that is to be used, the HG device notifies an HAAP device. The HAAP device switches the transmission mode. Specifically, the HG device detects a round trip time (Round Trip Time, RTT) of an LTE tunnel, and determines a to-be-used transmission mode based on the RTT of the LTE tunnel. When the RTT is less than a preconfigured threshold, the HG device determines that the bonding-tunnel transmission mode is used. When the RTT is greater than a preconfigured threshold, the HG device determines that the single-tunnel transmission mode is used.

In other words, in the prior art, a transmission mode switching process is as follows: The HG device determines a transmission mode, then the HG device notifies the HAAP device of the transmission mode to be switched to, and finally, the HAAP device performs a switching process. Therefore, a transmission mode switching delay is relatively long.

LEYMANN C HEIDEMANN DEUTSCHE TELEKOM AG M ZHANG B SARIKAYA HUAWEI M CULLEN PAINLESS SECURITY N: "Huawei's GRE Tunnel Bonding Protocol; rfc8157.txt", HUAWEI'S GRE TUNNEL BONDING PROTOCOL; RFC8157.TXT, INTERNET ENGINEERING TASK FORCE, IETF; STANDARD, INTERNET SOCIETY (ISOC) 4, RUE DES FALAISES CH- 1205 GENEVA, SWITZERLAND, 6 May 2017, pages 1-44, refers to systematic solutions on Generic Routing Encapsulation which is widely supported in both fixed and mobile networks.

WO2016/090978A1 refers to a traffic switching method and device, to guarantee there is only one network tunnel for forwarding traffic when the network delay is overly great, thus reducing the probability that messages cannot be reassembled.

### SUMMARY

The present invention is defined by the methods of independent claims 1 and 7 by the devices of independent claims 10 and 13, and also by the system of claim 15. . Additional features of embodiments of the invention are presented in the dependent claims. The invention provides a packet transmission method, apparatus, and system, so as to shorten a transmission mode switching delay.

According to a first aspect, a packet transmission method is provided, including: determining, by a first network device based on link quality information of at least one of a first tunnel and a second tunnel, a target transmission mode for transmitting a service packet, where the target transmission mode is a bonding-tunnel transmission mode or a single-tunnel transmission mode, the bonding-tunnel transmission mode is to transmit a service packet by using the first tunnel and the second tunnel, the single-tunnel transmission mode is to transmit a service packet by using the first tunnel, the first tunnel is a fixed network tunnel, and the second tunnel is a mobile network tunnel; switching, by the first network device, a transmission mode currently used for packet transmission to the target transmission mode; and transmitting, by the first network device, a service packet to a second network device by using the target transmission mode.

Therefore, according to the packet transmission method in this embodiment of this application, the first network device may determine, based on the link quality information of the at least one tunnel between the first network device and the second network device, the target transmission mode for transmitting a packet to the second network device. After determining the target transmission mode, the first network device does not need to instruct another network device to switch a transmission mode, but may directly switch the transmission mode. Therefore, a switching delay is shortened compared with the prior art.

In a possible implementation, the method further includes: determining, by the first network device, the link quality information of the at least one of the first tunnel and the second tunnel.

The link quality information of the at least one tunnel is link quality information collected by the first network device in real time. Therefore, an HAAP device determines the target transmission mode based on the link quality information of the at least one tunnel that is collected in real time, so as to switch a transmission mode in a timely manner when link quality changes.

In a possible implementation, the determining, by the first network device, the link quality information of the at least one of the first tunnel and the second tunnel includes: periodically sending, by the first network device, a link quality detection packet to the second network device by using the at least one tunnel; receiving a link quality detection response packet periodically returned, by using the at least one tunnel, by the second network device; and determining, by the first network device, the link quality information of the at least one tunnel at least based on the link quality detection response packet.

The first network device and the second network device exchange the link quality detection packet and the link quality detection response packet in real time, so that the first network device can obtain the link quality information of the at least one tunnel in real time. Further, the first network device determines, based on the link quality information obtained in real time, whether to switch a transmission mode, so that the first network device can switch the transmission mode in a timely manner when the transmission mode needs to be switched. This helps avoid a problem that a user packet is lost because a transmission mode cannot be switched in a timely manner.

In a possible implementation, the at least one tunnel includes the first tunnel, the link quality detection packet includes a first link quality detection packet sent by the first network device by using the first tunnel, and the first link quality detection packet includes at least one of the following:

a quantity of packets sent by the first network device by using the first tunnel, a quantity of bytes included in the sent packet, and information about a time for sending the first link quality detection packet; and
the link quality detection response packet includes a first link quality detection response packet returned by the second network device by using the first tunnel, and the first link quality detection response packet includes at least one of the following:
a quantity of packets received by the second network device by using the first tunnel, a quantity of bytes included in the received packet, and information about a time for receiving the first link quality detection packet.

The first network device periodically sends the first link quality detection packet by using the first tunnel, and periodically receives the first link quality detection response packet by using the first tunnel. The first network device can monitor link quality detection of the first tunnel in real time based on packet content that is used for link quality detection and that is carried in the first link quality detection packet and the first link quality detection response packet. Further, the first network device determines, based on the link quality information obtained in real time, whether to switch a transmission mode, so that the first network device can switch the transmission mode in a timely manner when the transmission mode needs to be switched. This helps avoid a problem that a user packet is lost because a transmission mode cannot be switched in a timely manner.

In a possible implementation, the first link quality detection packet is a first GRE control message, the first GRE control message includes a first attribute-value pair AVP corresponding to the first tunnel, and the first AVP is used to carry at least one of the quantity of packets sent by the first network device by using the first tunnel, the quantity of bytes included in the sent packet, and the information about a time for sending the first link quality detection packet; and
the first link quality detection response packet is a second GRE control message, the second GRE control message includes a second AVP corresponding to the first tunnel, and the second AVP is used to carry at least one of the quantity of packets received by the second network device by using the first tunnel, the quantity of bytes included in the received packet, and the information about a time for receiving the first link quality detection packet.

The first GRE control message and the second GRE control message are GRE control messages exchanged in real time. The first GRE control message and the second GRE control message may be newly added GRE control messages. In other words, real-time packet exchange between the first network device and the second network device may be implemented by newly adding a GRE control message. For example, the first network device and the second network device add packet content for link quality detection to corresponding attribute fields in the first GRE control message and the second GRE control message, to detect link quality of the first tunnel in real time.

Optionally, the first network device and the second network device may share an existing GRE control message to monitor link quality of the first tunnel in real time, provided that the existing GRE control message is modified into a message sent in real time. An implementation in which the first network device and the second network device add packet content for link quality detection by using an existing message format is simple and convenient, and is easy to implement.

In a possible implementation, the at least one tunnel includes the second tunnel, the link quality detection packet includes a second link quality detection packet sent by the first network device by using the second tunnel, and the second link quality detection packet includes at least one of the following:

a quantity of packets sent by the first network device by using the second tunnel, a quantity of bytes included in the sent packet, and information about a time for sending the second link quality detection packet; and

the link quality detection response packet includes a second link quality detection response packet returned by the second network device by using the second tunnel, and the second link quality detection response packet includes at least one of the following:

a quantity of packets received by the second network device by using the second tunnel, a quantity of bytes included in the received packet, and information about a time for receiving the second link quality detection packet.

The first network device sends the second link quality detection packet by using the second tunnel, and receives the second link quality detection response packet by using the second tunnel. The first network device can monitor link quality detection of the second tunnel in real time based on packet content that is used for link quality detection and that is carried in the second link quality detection packet and the second link quality detection response packet. Further, the first network device determines, based on the link quality information obtained in real time, whether to switch a transmission mode, so that the first network device can switch the transmission mode in a timely manner when the transmission mode needs to be switched. This helps avoid a problem that a user packet is lost because a transmission mode cannot be switched in a timely manner.

In a possible implementation, the second link quality detection packet is a third GRE control message, the third GRE control message includes a third AVP corresponding to the second tunnel, and the third AVP is used to carry at least one of the quantity of packets sent by the first network device by using the second tunnel, the quantity of bytes included in the sent packet, and the information about a time for sending the second link quality detection packet; and the second link quality detection response packet is a fourth GRE control message, the fourth GRE control message includes a fourth AVP corresponding to the second tunnel, and the fourth AVP is used to carry at least one of the quantity of packets received by the second network device by using the second tunnel, the quantity of bytes included in the received packet, and the information about a time for receiving the second link quality detection packet.

The third GRE control message and the fourth GRE control message are GRE control messages exchanged in real time. For example, the third GRE control message and the fourth GRE control message may be newly added GRE control messages. In other words, real-time packet exchange between the first network device and the second network device may be implemented by newly adding a GRE control message. The first network device and the second network device add packet content for link quality detection to corresponding attribute fields in the third GRE control message and the fourth GRE control message, to detect link quality of the second tunnel in real time.

Optionally, the first network device and the second network device may share an existing GRE control message to monitor link quality of the second tunnel in real time, provided that the existing GRE control message is modified into a message sent in real time. An implementation in which the first network device and the second network device add packet content for link quality detection by using an existing message format is simple and convenient, and is easy to implement.

The determining, by a first network device based on link quality information of at least one of a first tunnel and a second tunnel, a target transmission mode for transmitting a service packet includes:

determining the target transmission mode based on at least one of throughputs, packet loss rates, and downlink one-way delays of the first tunnel and the second tunnel.

Compared with an RTT, transmission parameters such as a throughput, a packet loss rate, and a downlink one-way delay can better reflect a downlink link status. Therefore, the first network device determines the target transmission mode based on the at least one of the throughputs, the packet loss rates, and the downlink one-way delays of the first tunnel and the second tunnel, but not simply based on the RTT. This helps more accurately determine link quality, so as to improve accuracy of a determined transmission mode.

In a possible implementation, the determining the target transmission mode based on at least one of throughputs, packet loss rates, and downlink one-way delays of the first tunnel and the second tunnel includes:

when a sum of the throughputs of the first tunnel and the second tunnel is greater than a bandwidth threshold of the first tunnel, determining that the target transmission mode is the bonding-tunnel transmission mode; or

when a sum of the throughputs of the first tunnel and the second tunnel is less than or equal to a bandwidth threshold of the first tunnel, determining that the target transmission mode is the single-tunnel transmission mode.

A throughput indicator can accurately reflect link quality of the two tunnels. Therefore, if the sum of the throughputs of the first tunnel and the second tunnel is greater than the bandwidth threshold of the first tunnel, it may be determined that the link quality of the two tunnels is better than that of one tunnel. Therefore, transmitting a packet by using the two tunnels helps improve user experience. If the sum of the throughputs of the first tunnel and the second tunnel is less than the bandwidth threshold of the first tunnel, it may be determined that the link quality of the two tunnels is inferior to that of one tunnel. Therefore, transmitting a packet by using one tunnel helps avoid impact of the other tunnel on the link quality.

In a possible implementation, the determining the target transmission mode based on at least one of throughputs, packet loss rates, and downlink one-way delays of the first tunnel and the second tunnel includes:

when the sum of the throughputs of the first tunnel and the second tunnel is less than or equal to the bandwidth threshold of the first tunnel, and a difference between the downlink one-way delays of the first tunnel and the second tunnel is greater than a first delay threshold, determining that the target transmission mode is the single-tunnel transmission mode; or

when the sum of the throughputs of the first tunnel and the second tunnel is less than or equal to the bandwidth threshold of the first tunnel, and a difference between the downlink one-way delays of the first tunnel and the second tunnel is less than or equal to the first delay threshold, determining that the target transmission mode is the bonding-tunnel transmission mode.

Therefore, when the sum of the throughputs of the first tunnel and the second tunnel is less than or equal to the bandwidth threshold of the first tunnel, the first network device may further determine, with reference to the difference between the downlink one-way delays of the first tunnel and the second tunnel, a transmission mode that is to be used. If the difference between the downlink one-way delays of the first tunnel and the second tunnel is less than or equal to the first delay threshold, it may be considered that a packet passing through the first tunnel and the second tunnel can be successfully reordered at a receive end of the packet. Therefore, the first network device may transmit the service packet by using the bonding transmission mode. If the difference between the downlink one-way delays of the first tunnel and the second tunnel is greater than the first delay threshold, it may be considered that a packet passing through the first tunnel and the second tunnel possibly cannot be successfully reordered at a receive end of the packet. In this case, the first network device may transmit the service packet by using the single-tunnel transmission mode.

In a possible implementation, the determining, by a first network device based on link quality information of at least one of a first tunnel and a second tunnel, a target transmission mode for transmitting a service packet includes:

determining a target state of a state machine based on the link quality information of the at least one tunnel, where each state of the state machine is corresponding to a transmission mode; and

determining a transmission mode corresponding to the target state as the target transmission mode for transmitting a service packet.

Therefore, according to the packet transmission method in this aspect of this invention, -the first network device can determine the target state of the state machine based on the link quality information of the at least one tunnel that is obtained in real time, and transmit the service packet by using the transmission mode corresponding to the target state, so as to switch a switching mode in a timely manner, to be specific, shorten a switching delay.

In a possible implementation, the determining a target state of a state machine based on the link quality information of the at least one tunnel includes:

determining the target state of the state machine based on at least one of throughputs, packet loss rates, and downlink one-way delays of the first tunnel and the second tunnel.

Therefore, the first network device can comprehensively consider factors such as the throughputs, the packet loss rates, or the downlink one-way delays of the first tunnel and the second tunnel, to determine the target state of the state machine, and transmit the service packet by using the transmission mode corresponding to the target state. This helps reduce a false determining probability, and improve accuracy of a determined switching mode.

In a possible implementation, the determining a state of a state machine based on the link quality information of the at least one tunnel includes:

if the state machine is currently in a first state, determining, by the first network device, throughputs of the first tunnel and the second tunnel and downlink one-way delays of the first tunnel and the second tunnel; and

determining the target state of the state machine based on the throughputs of the first tunnel and the second tunnel and the downlink one-way delays of the first tunnel and the second tunnel.

When the state machine is in the first state, the first network device may determine the link quality information with reference to information such as the throughputs and the downlink one-way delays. Because the first network device can comprehensively consider the throughputs and a difference between the downlink one-way delays when determining a transmission mode, the first network device can more accurately determine link quality. This helps improve accuracy of the determined transmission mode.

In a possible implementation, the determining the target state of the state machine based on the throughputs of the first tunnel and the second tunnel and the downlink one-way delays of the first tunnel and the second tunnel includes:

if a sum of the throughputs of the first tunnel and the second tunnel is greater than a bandwidth threshold of the first tunnel, determining that the target state of the state machine is a second state; or

if a sum of the throughputs of the first tunnel and the second tunnel is not greater than a bandwidth threshold of the first tunnel, and a difference between the downlink one-way delays of the first tunnel and the second tunnel is greater than a first delay threshold, determining that the target state of the state machine is a third state; or

if a sum of the throughputs of the first tunnel and the second tunnel is not greater than a bandwidth threshold of the first tunnel, and a difference between the downlink one-way delays of the first tunnel and the second tunnel is less than or equal to the first delay threshold, or if a sum of the throughputs of the first tunnel and the second tunnel is less than a first throughput threshold, determining that the target state of the state machine is the first state.

The first state and the second state are both corresponding to the bonding transmission mode, and the third state is corresponding to the single-tunnel transmission mode.

Generally, when an overall throughput of the first tunnel and the second tunnel is greater than the bandwidth threshold of the first tunnel, the first network device switches the state machine to the second state, to transmit a packet by using the bonding-tunnel transmission mode. When an overall throughput of the first tunnel and the second tunnel is less than or equal to the bandwidth threshold of the first tunnel, the first network device may further determine the difference between the downlink one-way delays of the first tunnel and the second tunnel, and determine, based on the difference between the downlink one-way delays, a state to switch to. If the difference between the downlink one-way delays is greater than the first delay threshold, the first network device switches the state machine to the third state, to transmit a packet by using the single-tunnel transmission mode. If the difference between the downlink one-way delays is less than or equal to the first delay threshold, the first network device keeps the state machine in the first state, and further determines link statuses of the two tunnels, to determine a target state to which the state machine is to be switched, and transmit a packet by using a corresponding transmission mode.

Therefore, according to the packet transmission method in this aspect of the invention, the first network device may use the throughputs of the first tunnel and the second tunnel as a primary determining condition. When the overall throughput of the first tunnel and the second tunnel is greater than the bandwidth threshold of the first tunnel, in other words, link quality of the second tunnel is relatively good, the bonding-tunnel transmission mode is used to provide a large-bandwidth access service for a user, so as to improve user experience. When the overall throughput of the first tunnel and the second tunnel is less than or equal to the bandwidth threshold of the first tunnel, the first network device further determines link quality with reference to the difference between the downlink one-way delays of the first tunnel and the second tunnel. When the difference between the downlink one-way delays is greater than the first delay threshold, link quality of the second tunnel is relatively poor, and the single-tunnel transmission mode is used. This helps prevent performance of the first tunnel from being affected when the bonding-tunnel transmission mode continues to be used when the link quality of the second tunnel is relatively poor. When the difference between the downlink one-way delays is less than or equal to the first delay threshold, in other words, a packet may be successfully reordered on the two tunnels, the bonding-tunnel transmission mode is used to improve user experience.

In a possible implementation, the determining a target state of a state machine based on the link quality information of the at least one tunnel includes:

if the state machine is currently in the second state, determining, by the first network device, throughputs of the first tunnel and the second tunnel and downlink one-way delays of the first tunnel and the second tunnel; and

determining the target state of the state machine based on the throughputs of the first tunnel and the second tunnel and the downlink one-way delays of the first tunnel and the second tunnel.

In a possible implementation, the determining the target state of the state machine based on the throughputs of the first tunnel and the second tunnel and the downlink one-way delays of the first tunnel and the second tunnel includes: if a sum of the throughputs of the first tunnel and the second tunnel is not greater than a bandwidth threshold of the first tunnel, and a difference between the downlink one-way delays of the first tunnel and the second tunnel is greater than a second delay threshold, determining that the target state of the state machine is a first state; or if a sum of the throughputs of the first tunnel and the second tunnel is greater than a bandwidth threshold of the first tunnel, determining that the target state of the state machine is the second state; or if a difference between the downlink one-way delays of the first tunnel and the second tunnel is less than or equal to the second delay threshold, determining that the target state of the state machine is the second state.

Therefore, according to the packet transmission method in this aspect of the invention, when link quality of the second tunnel is relatively good, the first network device may keep the state machine in the second state, to transmit the service packet by using the bonding transmission mode corresponding to the second state. When link quality of the second tunnel is relatively poor, the first network device switches the state machine to the first state, and further determines link quality, to determine a target state to which the state machine is to be switched, and transmit a packet by using a

corresponding transmission mode.

Optionally, the method further includes: if the state machine is currently in the third state, switching the state machine from the third state to the first state when counting of a preset timer ends.

In a possible implementation, the first network device is a hybrid access aggregation point HAAP, for example, the HAAP may be a mid-range/high-end router or switch device. The second network device is a home gateway HG, for example, the HG may be a mid-range/low-end router, switching device, or customer-premises equipment (Customer-premises equipment, CPE).

Therefore, according to the packet transmission method in an aspect of the invention, the first network device can collect the link quality information of the first tunnel and the second tunnel in real time, and then determine, based on the link quality information of the first tunnel and the second tunnel that is collected in real time, whether to switch a transmission mode. Therefore, the transmission mode can be switched in a timely manner. In addition, the first network device can determine, with reference to the throughputs, the packet loss rates, or the downlink one-way delays, the target transmission mode that is to be used. Therefore, the determined target transmission mode is more accurate. In other words, according to the packet transmission method in this embodiment of this application, the transmission mode can be accurately switched in a timely manner.

According to a second aspect, a packet transmission method is provided, including: receiving, by a second network device, a link quality detection packet periodically sent, by using at least one of a first tunnel and a second tunnel, by a first network device, where the first tunnel is a fixed network tunnel, and the second tunnel is a mobile network tunnel; and

periodically returning, by the second network device, a link quality detection response packet to the first network device by using the at least one tunnel, where the link quality detection response packet is used by the first network device to determine a target transmission mode for transmitting a service packet to the second network device.

The second network device periodically receives the link quality detection packet by using the at least one tunnel, and periodically sends the link quality detection response packet by using the at least one tunnel. The second network device adds packet content for link quality detection to the link quality detection response packet, so that the first network device can obtain link quality information of the at least one tunnel in real time based on packet content that is used for link quality detection and that is carried in the link quality detection packet and the link quality detection response packet.

In a possible implementation, the at least one tunnel includes the first tunnel, the link quality detection packet includes a first link quality detection packet sent by the first network device by using the first tunnel, and the first link quality detection packet includes at least one of the following:

a quantity of packets sent by the first network device by using the first tunnel, a quantity of bytes included in the sent packet, and information about a time for sending the first link quality detection packet; and

the link quality detection response packet includes a first link quality detection response packet returned by the second network device by using the first tunnel, and the first link quality detection response packet includes at least one of the following:

a quantity of packets received by the second network device by using the first tunnel, a quantity of bytes included in the received packet, and information about a time for receiving the first link quality detection packet.

The second network device periodically receives the first link quality detection packet by using the first tunnel, and periodically sends the first link quality detection response packet by using the first tunnel. The second network device adds packet content for link quality detection to the first link quality detection response packet, so that the first network device can obtain link quality information of the first tunnel in real time based on packet content that is used for link quality detection and that is carried in the first link quality detection packet and the first link quality detection response packet.

In a possible implementation, the first link quality detection packet is a first GRE control message, the first GRE control message includes a first attribute-value pair AVP corresponding to the first tunnel, and the first AVP is used to carry at least one of the quantity of packets sent by the first network device by using the first tunnel, the quantity of bytes included in the sent packet, and the information about a time for sending the first link quality detection packet; and

the first link quality detection response packet is a second GRE control message, the second GRE control message includes a second AVP corresponding to the first tunnel, and the second AVP is used to carry at least one of the quantity of packets received by the second network device by using the first tunnel, the quantity of bytes included in the received packet, and the information about a time for receiving the first link quality detection packet.

Optionally, the first GRE control message and the second GRE control message may be existing GRE control messages, or may be newly added GRE control messages. The first network device and the second network device can obtain link quality information of the first tunnel by exchanging the first GRE control message and the second GRE control message in real time.

An implementation in which the existing GRE control message is shared to carry packet content for link quality detection is simple and convenient, and is easy to implement.

In a possible implementation, the at least one tunnel includes the second tunnel, the link quality detection packet includes a second link quality detection packet sent by the first network device by using the second tunnel, and the second link quality detection packet includes at least one of the following:

a quantity of packets sent by the first network device by using the second tunnel, a quantity of bytes included in the sent packet, and information about a time for sending the second link quality detection packet; and
the link quality detection response packet includes a second link quality detection response packet returned by the second network device by using the second tunnel, and the second link quality detection response packet includes at least one of the following:
a quantity of packets received by the second network device by using the second tunnel, a quantity of bytes included in the received packet, and information about a time for receiving the second link quality detection packet.

The second network device periodically receives the second link quality detection packet by using the second tunnel, and periodically sends the second link quality detection response packet by using the second tunnel. The second network device adds packet content for link quality detection to the second link quality detection response packet, so that the first network device can obtain link quality information of the second tunnel in real time based on packet content that is used for link quality detection and that is carried in the second link quality detection packet and the second link quality detection response packet.

In a possible implementation, the second link quality detection packet is a third GRE control message, the third GRE control message includes a third AVP corresponding to the second tunnel, and the third AVP is used to carry at least one of the quantity of packets sent by the first network device by using the second tunnel, the quantity of bytes included in the sent packet, and the information about a time for sending the second link quality detection packet; and the second link quality detection response packet is a fourth GRE control message, the fourth GRE control message includes a fourth AVP corresponding to the second tunnel, and the fourth AVP is used to carry at least one of the quantity of packets received by the second network device by using the second tunnel, the quantity of bytes included in the received packet, and the information about a time for receiving the second link quality detection packet.

Therefore, the first network device and the second network device may add packet content for link quality detection by using an existing GRE control message, to detect link quality of the second tunnel. An implementation in which an existing message format is used is simple and convenient, and is easy to implement.

According to a third aspect, a packet transmission apparatus is provided, where the apparatus is configured to perform the method in the first aspect or any possible implementation of the first aspect.

Specifically, the apparatus may include a module configured to perform the method in the first aspect or any possible implementation of the first aspect.

According to a fourth aspect, a packet transmission apparatus is provided, where the apparatus is configured to perform the method in the second aspect or any possible implementation of the second aspect.

Specifically, the apparatus may include a module configured to perform the method in the second aspect or any possible implementation of the second aspect.

According to a fifth aspect, a packet transmission apparatus is provided, where the apparatus includes a memory and a processor, the memory is configured to store an instruction, and the processor is configured to execute the instruction stored in the memory, and execution of the the instruction stored in the memory enables the processor to perform the method in the first aspect or any possible implementation of the first aspect.

According to a sixth aspect, a packet transmission apparatus is provided, where the apparatus includes a memory and a processor, the memory is configured to store an instruction, and the processor is configured to execute the instruction stored in the memory, and execution of the the instruction stored in the memory enables the processor to perform the method in the second aspect or any possible implementation of the second aspect.

According to a seventh aspect, a packet transmission apparatus is provided, including a main control board and an interface board. The main control board is configured to complete functions such as system management, device maintenance, and protocol processing. The interface board is configured to: provide various service interfaces (for example, a POS interface, a GE interface, and an ATM interface), and forward a data packet. The main control board and the interface board connect to a system backplane by using a system bus for interworking. A central processing unit on the interface board is configured to: control and manage the interface board, and communicate with a central processing unit on the main control board.

Specifically, the main control board is configured to perform the method in the first aspect or any possible implementation of the first aspect by using the interface board.

According to an eighth aspect, a packet transmission system is provided, including the packet transmission apparatus in the third aspect or any possible implementation of the third aspect, or the packet transmission apparatus in the fifth aspect or any possible implementation of the fifth aspect, or the packet transmission apparatus in the seventh aspect or any possible implementation of the seventh aspect; and the packet transmission apparatus in the fourth aspect or any possible implementation of the fourth aspect, or the packet transmission apparatus in the sixth aspect or any possible implementation of the sixth aspect.

According to a ninth aspect, a computer readable medium is provided, where the computer readable medium stores program code executed by a network device, and the program code includes an instruction used to perform the method in the first aspect or any possible implementation of the first aspect.

According to a tenth aspect, a computer readable medium is provided, where the computer readable medium stores program code executed by a network device, and the program code includes an instruction used to perform the method in the second aspect or any possible implementation of the second aspect.

## BRIEF DESCRIPTION OF DRAWINGS

FIG. 1 is a schematic diagram of an application scenario according to an embodiment of this application;
FIG. 2 is a schematic interaction diagram of a packet transmission method according to an embodiment of this application;
FIG. 3 is a schematic diagram of a method for determining link quality information according to an embodiment of this application;
FIG. 4 is a state transition diagram of a state machine according to an embodiment of this application;
FIG. 5 is a schematic block diagram of a packet transmission apparatus according to an embodiment of this application;
FIG. 6 is a schematic block diagram of a packet transmission apparatus according to another embodiment of this application;
FIG. 7 is a schematic block diagram of a packet transmission apparatus according to still another embodiment of this application;
FIG. 8 is a schematic block diagram of a packet transmission apparatus according to still another embodiment of this application;
FIG. 9 is a schematic structural diagram of a packet transmission apparatus according to an embodiment of this application; and
FIG. 10 is a schematic block diagram of a packet transmission system according to an embodiment of this application.

## DESCRIPTION OF EMBODIMENTS

The following describes technical solutions of embodiments in this application with reference to accompanying drawings.

It should be noted that in the embodiments of this application, a first tunnel and a second tunnel are established between a first network device and a second network device. The first tunnel may be a fixed network tunnel, for example, a DSL tunnel, and the second tunnel is a mobile network tunnel, for example, an LTE tunnel. The DSL tunnel herein may also be referred to as a DSL connection (DSL connection), and the LTE tunnel herein may also be referred to as an LTE connection (LTE connection). The DSL tunnel and the LTE tunnel may be implemented by using an existing tunneling technology, for example, a Generic Routing Encapsulation (Generic Routing Encapsulation, GRE) tunneling technology or another existing tunneling technology. Alternatively, the DSL tunnel and the LTE tunnel may be implemented by using a newly defined tunneling technology in a future technology or standard. This is not particularly limited in the embodiments of this application.

It should be understood that the first tunnel and the second tunnel only represent two types of tunnels, but are not construed as a particular limitation on a quantity of tunnels and types of the tunnels. For example, the first tunnel may include one or more DSL tunnels, and the second tunnel may also include one or more LTE tunnels. The first tunnel may be a fixed network tunnel, and the second tunnel may be a newly defined tunnel of another type in a future technology or standard. Alternatively, the first tunnel is a newly defined tunnel of another type in a future technology or standard, and the second tunnel is a mobile network tunnel. Alternatively, both the first tunnel and the second tunnel are newly defined tunnels in a future technology or standard. The embodiments of this application are described merely using an example in which the first tunnel is a fixed network tunnel, and the second tunnel is a mobile network tunnel. More specifically, the embodiments of this application are described using an example in which the first tunnel is a DSL tunnel, and the second tunnel is an LTE tunnel. However, this shall not constitute any limitation on the embodiments of this application.

It should further be understood that the first network device and the second network device represent two tunnel port devices between which the first tunnel and the second tunnel are established. For example, the first network device is an HAAP device, and the second network device is an HG device. To be specific, the first network device may be a network device on a network side, and the second network device may be a network device on a user side.

For ease of understanding and description, description is provided below using an example in which the first tunnel is an LTE tunnel, the second tunnel is a DSL tunnel, the first network device is an HAAP device, and the second network device is an HG device

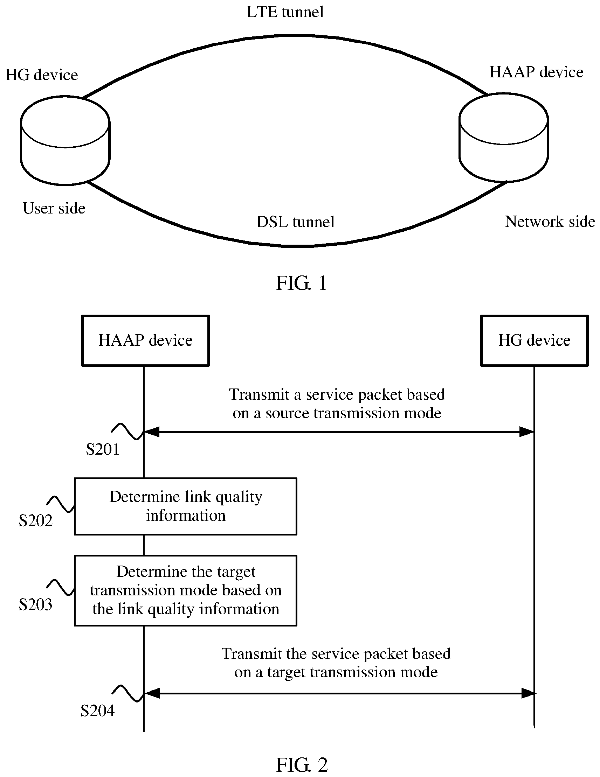

As shown in FIG. 1, the DSL tunnel and the LTE tunnel are established between the HAAP device and the HG device. The HAAP device and the HG device may transmit a service packet by using either the DSL tunnel or the LTE tunnel, that is, a single-tunnel transmission mode. When the packet is transmitted by using only the DSL tunnel, the single-tunnel transmission mode may also be referred to as a DSL-only transmission mode. The embodiments of this application are mainly described using an example in which the single-tunnel transmission mode is the DSL-only transmission mode. However, a likelihood that the packet is transmitted by using only the LTE tunnel in the single-tunnel transmission mode is not excluded. Alternatively, the HAAP device and the HG device may transmit a service packet by using a bonding tunnel of the DSL tunnel and the LTE tunnel, in other words, transmit the service packet by using a bonding-tunnel transmission mode.

It can be learned from the foregoing description that in the prior art, a transmission mode that is to be used by the HAAP device and the HG device to transmit a service packet is determined by a network device on a user side, that is, the HG device. After determining a transmission mode that is to be used, the HG device instructs the HAAP device to switch a transmission mode. Such mode switching causes a relatively long switching delay. Consequently, a problem that a user packet is lost because a transmission mode cannot be switched in a timely manner may be caused, affecting user experience.

In the prior art, a specific manner of determining the transmission mode by the HG device is: sending a keepalive packet by using the LTE tunnel and the DSL tunnel; detecting round trip time (Round Trip Time, RTT) of the DSL tunnel and the LTE tunnel; when a difference between the RTTs of the DSL tunnel and the LTE tunnel is greater than a switching threshold, determining that the single-tunnel transmission mode is used; and otherwise, determining that the bonding-tunnel transmission mode is used. The RTT parameter cannot accurately reflect downlink link quality. A short RTT does not necessarily indicate good link quality, for example, although the RTT is short, a packet loss rate (Packet Loss Rate, PLR) is high. A long RTT does not necessarily indicate poor link quality, for example, although the RTT is long, a PLR is low. Therefore, accuracy of determining, based on the RTT, a transmission mode that is to be used is relatively low, in other words, a false determining probability is relatively high.

In view of this, the aspects of the invention provide a packet transmission method, apparatus, and system, so as to reduce a transmission mode switching delay, reduce a false determining probability, and improve reliability of a determined transmission mode.

A packet transmission method according to an aspect of the invention, is described below in detail with reference to FIG. 2. It should be understood that FIG. 2 is a schematic interaction diagram of a packet transmission method according to an embodiment of this application, and shows detailed communication steps or operations of the method. However, these steps or operations are merely examples. Other operations or variations of the operations in FIG. 2 may be further performed in this embodiment of this application. In addition, the steps in FIG. 2 may be separately performed in a sequence different from that shown in FIG. 2, or not all the operations in FIG. 2 may be necessarily performed.

For example, in the embodiment shown in FIG. 2, if the source transmission mode is the same as the target transmission mode, S204 may not be performed.

FIG. 2 is a schematic flowchart of a packet transmission method 200 according to an embodiment of this application. The method 200 is described from a perspective of device interaction, and may be applied to the system shown in FIG. 1.

As shown in FIG. 2, the method 200 may include the following content.

In S201, the HG device and an HAAP device transmit a service packet by using a source transmission mode. The source transmission mode is a transmission mode currently used by the HAAP device and the HG device to transmit the service packet. The source transmission mode may be a single-tunnel transmission mode, or may be a bonding-tunnel transmission mode.

In S202, the HAAP device determines link quality information of at least one tunnel between the HAAP device and the HG device.

The link quality information of the at least one tunnel may be used by the HAAP device to determine a target transmission mode for transmitting a service packet, to be specific, a transmission mode that is to be used for transmitting a service packet. If the determined target transmission mode is the same as the source transmission mode, a transmission mode may not be switched, that is, S204 may not be performed. Otherwise, the transmission mode needs to be switched, that is, S204 needs to be performed.

It should be noted that the at least one tunnel may include only a DSL tunnel, or may include only an LTE tunnel, or may include a DSL tunnel and an LTE tunnel. In other words, the HAAP device may determine only link quality information of the DSL tunnel, or may determine only link quality information of the LTE tunnel, or may determine link quality information of the DSL tunnel and that of the LTE tunnel.

In other words, S202 may specifically include: determining, by the HAAP device, only the link quality information of the DSL tunnel, or determining only the link quality information of the LTE tunnel, or determining the link quality information of the DSL tunnel and that of the LTE tunnel.

In a possible implementation, S202 may further specifically include:

determining, by the HAAP device based on a transmission mode currently used for packet transmission, link quality information that needs to be detected.

For example, when the source transmission mode is a DSL-only transmission mode, the HAAP device may determine that only the link quality information of the DSL tunnel is to be detected. Alternatively, when the source transmission mode is the bonding-tunnel transmission mode, the HAAP device determines that the link quality information of the DSL tunnel and that of the LTE tunnel are to be detected.

In conclusion, the HAAP device may determine, based on the source transmission mode, which link quality information that needs to be detected, or may detect the link quality information of the two tunnels regardless of whether the source transmission mode is the single-tunnel transmission mode or the bonding-tunnel transmission mode, or may detect only the link quality information of the DSL tunnel or only the link quality information of the LTE tunnel. To be specific, the link quality information that needs to be detected may be or may not be related to the source transmission mode. This is not particularly limited in this embodiment of this application.

It should be understood that in this aspect of the invention, the link quality information determined by the HAAP device in S202 does not indicate that all the determined link quality information has to be used during subsequent transmission mode determining. In S203, when a transmission mode is determined based on the link quality information, specific link quality information that is to be used may be selected based on an actual case. To be specific, the link quality information used in S203 may include a part or all of the link quality information determined in S202. In other words, the HAAP device may determine the transmission mode by using all the link quality information determined in S202, or may determine the transmission mode by using only a part of the link quality information.

Optionally, if the at least one tunnel includes only the DSL tunnel, the link quality information of the DSL tunnel may include at least one of a throughput (Throughout), a PLR, and a downlink one-way delay of the DSL tunnel; or

if the at least one tunnel includes only the LTE tunnel, the link quality information of the LTE tunnel may include at least one of a throughput, a packet loss rate, and a downlink one-way delay of the LTE tunnel.

Alternatively, if the at least one tunnel includes the DSL tunnel and the LTE tunnel, the link quality information corresponding to the DSL tunnel and the link quality information corresponding to the LTE tunnel may be the same, or may be different. For example, the link quality information of the DSL tunnel may include a throughput and a downlink one-way delay of the DSL tunnel; and the link quality information of the LTE tunnel may include a throughput and a downlink one-way delay of the LTE tunnel, or the link quality information of the LTE tunnel may include only a downlink one-way delay of the LTE tunnel.

In a possible embodiment, S202 may specifically include:

periodically sending, by the HAAP device, a link quality detection packet to the second network device by using the at least one tunnel;

receiving a link quality detection response packet periodically returned, by using the at least one tunnel, by the HG device; and

determining, by the HAAP device, the link quality information of the at least one tunnel at least based on the link quality detection response packet.

In other words, the HAAP device may determine the link quality information of the at least one tunnel by exchanging the link quality detection packet and the link quality detection response packet with the HG device. Packet content carried in the link quality detection packet and the link quality detection response packet may be determined based on link quality information that needs to be determined.

In an embodiment, the at least one tunnel includes the DSL tunnel, and the link quality detection packet may include a first link quality detection packet sent by the HAAP device by using the DSL tunnel. In this case, the first link quality detection packet may include at least one of the following:

a quantity of packets sent by the HAAP device by using the DSL tunnel, a quantity of bytes included in the sent packet, and information about a time for sending the first link quality detection packet.

Correspondingly, the link quality detection response packet includes a first link quality detection response packet returned by the HG device by using the DSL tunnel, and the first link quality detection response packet includes at least one of the following:

a quantity of packets received by the HG device by using the DSL tunnel, a quantity of bytes included in the received packet, and information about a time for receiving the first link quality detection packet.

It should be noted that packet content carried in the first link quality detection packet and the first link quality detection response packet may be determined based on link quality information of the DSL tunnel that needs to be determined. For example, if the throughput of the DSL tunnel needs to be determined, because a throughput is related to a quantity of bytes of a packet received at a receive end and a time, the first link quality detection response packet may include the quantity of bytes of the packet received by the HG device by using the DSL tunnel and the information about a time for receiving the packet. Alternatively, if the packet loss rate of the DSL tunnel needs to be determined, the first link quality detection packet may include the quantity of packets sent by the HAAP device by using the DSL tunnel and the information about a time for sending the first link quality detection packet, and the first link quality detection response packet may include the quantity of packets received by the HG device and the information about a time for receiving the packet.

In another embodiment not covered by the claims, if the at least one tunnel includes the LTE tunnel, the link quality detection packet may include a second link quality detection packet sent by the HAAP device by using the LTE tunnel. The second link quality detection packet includes at least one of the following:

a quantity of packets sent by the HAAP device by using the LTE tunnel, a quantity of bytes included in the sent packet, and information about a time for sending the second link quality detection packet.

Correspondingly, the link quality detection response packet may include a second link quality detection response packet returned by the HG device by using the LTE tunnel, and the second link quality detection response packet includes at least one of the following:

a quantity of packets received by the HG device by using the LTE tunnel, a quantity of bytes included in the received packet, and information about a time for receiving the second link quality detection packet.

Likewise, packet content carried in the second link quality detection packet and the second link quality detection response packet may be determined based on link quality information of the LTE tunnel that needs to be determined. Details are not described herein.

Optionally, if the at least one tunnel includes the DSL tunnel and the LTE tunnel, the link quality detection packet may include the first link quality detection packet and the second link quality detection packet in the foregoing embodiment, and the link quality detection response packet may include the first link quality detection response packet and the second link quality detection response packet in the foregoing embodiment.

It should be understood that in this embodiment the link quality detection packet and the link quality detection response packet may be an existing message or packet that is stipulated in an existing protocol and that is used for communication between the HAAP device and the HG device. For example, an attribute field may be newly added to the existing message or packet, and packet content that needs to be carried is included in the newly added attribute field. Alternatively, a message or a packet may be newly added between the HAAP device and the HG device, and packet content for link quality detection is carried in the newly added message or packet, so as to implement link quality detection between the HAAP device and the HG device.

In a possible implementation, the first link quality detection packet may be a first Generic Routing Encapsulation (Generic Routing Encapsulation, GRE) control message, the first GRE control message includes a first attribute-value pair (Attribute Value Pair, AVP) corresponding to the DSL tunnel, and the first AVP is used to carry at least one of the quantity of packets sent by the HAAP device by using the DSL tunnel, the quantity of bytes included in the sent packet, and the information about a time for sending the first link quality detection packet.

Correspondingly, the first link quality detection response packet may be a second GRE control message, the second GRE control message includes a second AVP corresponding to the DSL tunnel, and the second AVP is used to carry at least one of the quantity of packets received by the HG device by using the DSL tunnel, the quantity of bytes included in the received packet, and the information about a time for receiving the first link quality detection packet.

Likewise, the second link quality detection packet may be a third GRE control message, the third GRE control message includes a third AVP corresponding to the second tunnel, and the third AVP is used to carry at least one of the quantity of packets sent by the HAAP device by using the second tunnel, the quantity of bytes included in the sent packet, and the information about a time for sending the second link quality detection packet.

The second link quality detection response packet may be a fourth GRE control message, the fourth GRE control message includes a fourth AVP corresponding to the second tunnel, and the fourth AVP is used to carry at least one of the quantity of packets received by the HG device by using the second tunnel, the quantity of bytes included in the received packet, and the information about a time for receiving the second link quality detection packet.

In other words, the link quality detection packet sent by the HAAP device to the HG device and the link quality detection response packet sent by the HG device to the HAAP device may be an existing GRE control message, for example, a GRE tunnel setup request (GRE Tunnel Setup Request) message, a GRE tunnel setup accept (GRE Tunnel Setup Accept) message, a GRE tunnel setup deny (GRE Tunnel Setup Deny) message, or a GRE tunnel notify (GRE Tunnel Notify) message. Specifically, an attribute field may be newly added to the existing GRE control message to carry packet content for link quality detection.

Because the link quality detection packet and the link quality detection response packet are packets exchanged in real time, when the existing GRE control message is used, the existing GRE control message is modified into a packet that can be exchanged in real time, so that the GRE control message can be sent in real time, thereby obtaining link quality information of a to-be-detected tunnel in real time.

Optionally, the link quality detection packet and the link quality detection response packet may be newly added GRE control messages that can be exchanged in real time. In other words, a GRE control message may be newly added between the HAAP device and the HG device, and packet content for link quality detection is carried in the newly added GRE control message, so as to implement link quality detection between the HAAP device and the HG device.

It should be noted that the first GRE control message sent by the HAAP device by using the DSL tunnel and the third GRE control message sent by the HAAP device by using the LTE tunnel may be a same GRE control message, or may be different GRE control messages. For example, both the first GRE control message and the third GRE control message may be a GRE tunnel setup request message, or one is a GRE tunnel setup request message and the other is a GRE tunnel notify message. The same is true for the second GRE control message sent by the HG device by using the DSL tunnel and the fourth GRE control message sent by the HG device by using the LTE tunnel. For example, both the second GRE control message and the fourth GRE control message may be a GRE tunnel setup accept message, or one is a GRE tunnel setup accept message and the other is a GRE tunnel deny message.

In addition, the first GRE control message sent by the HAAP device by using the DSL tunnel and the third GRE control message sent by the HAAP device by using the LTE tunnel may include corresponding attribute-value pairs (Attribute Value Pair, AVP), that is, attribute fields. For example, the first GRE control message sent by using the DSL tunnel may include the first AVP to carry packet content for link quality detection of the DSL tunnel. The third GRE control message sent by using the LTE tunnel may include the third AVP to carry packet content for link quality detection of the LTE tunnel.

If the first GRE control message and the third control message are a same GRE control message, the first AVP and the third AVP may be different attribute fields. In other words, the packet content for link quality detection of the DSL tunnel and the packet content for link quality detection of the LTE tunnel may be respectively carried in the different attribute fields. Alternatively, if the first GRE control message and the third control message are different GRE control messages, the first AVP and the third AVP may be a same attribute field or different attribute fields.

Likewise, the same is true for the second GRE control message sent by the HG device by using the DSL tunnel and the fourth GRE control message sent by the HG device by using the LTE tunnel. Details are not described herein.

A newly added GRE control message is described below using an example in which the link quality detection packet and the link quality detection response packet are GER control messages of a same format. In other words, the newly added GRE control message is used as the link quality detection packet and the link quality detection response packet. GER control messages of different formats may be used to implement the link quality detection packet and the link quality detection response packet in a similar manner. Details are not described herein.

A format of a packet header of the newly added GRE control message is as follows:

```
+-+-+-+-+-+-+-+-+-+-+-+-+-+-+-+-+-+-+-+-+-+-+-+-+-+-+-+-+-+-+-+-+
|0||1|0|    Reserved0       |Ver|    Protocol Type 0xB7EA        |
+-+-+-+-+-+-+-+-+-+-+-+-+-+-+-+-+-+-+-+-+-+-+-+-+-+-+-+-+-+-+-+-+

|                               Key                             |
+-+-+-+-+-+-+-+-+-+-+-+-+-+-+-+-+-+-+-+-+-+-+-+-+-+-+-+-+-+-+-+-+
| MsgType | T-Type |                                             |
+-+-+-+-+-+-+-+-+-+            Attributes                       +
~                                                             ~
+-+-+-+-+-+-+-+-+-+-+-+-+-+-+-+-+-+-+-+-+-+-+-+-+-+-+-+-+-+-+-+-+
```

The first two lines of the packet header are a GRE header, and include eight bytes in total. The first byte of the third line, namely, Msg Type (message type), is a packet header of the HAAP protocol, is used to indicate a message type of the GRE control message, and occupies eight bytes. In an existing protocol, MsgType is a reserved value ranging from 7 to 15. Therefore, a value may be selected from 7 to 15 to indicate that the packet is a link quality detection packet or a link quality detection response packet. For example, it may be set that when Msg Type is 10, it indicates that the packet is the link quality detection packet or the link quality detection response packet. In this way, a network device may determine a message type of the packet based on Msg Type in the packet header.

An encapsulated attribute (attribute) of a packet sent by the HAAP is an AVP of a type-length-value (Type Length Value, TLV) format. A format of an attribute field of the GRE control message is as follows:

```
+-+-+-+-+-+-+-+-+
|Attribute Type |                          (1 byte)
+-+-+-+-+-+-+-+-+-+-+-+-+-+-+-+
| Attribute Length                |  (2 bytes)
+-+-+-+-+-+-+-+-+-+-+-+-+-+-+-+
| Attribute Value                 ~  (variable)
+-+-+-+-+-+-+-+-+-+-+-+-+-+-+-+
```

For example, it may be set that different "attribute types" (attribute type) are used to respectively indicate different tunnels. For example, it may be set that when the attribute type is 60, it indicates that the packet is a link quality detection packet or a link quality detection response packet of the DSL tunnel, and when the attribute type is 61, it indicates that the packet is a link quality detection packet or a link quality detection response packet of the LTE tunnel. As an example instead of a limitation, "attribute lengths" (attribute length) and "attribute values" (attribute value) corresponding to the different attribute types are respectively shown in Table 1.

Table 1

| Attribute type<br><br>Attribute Type | Attribute length<br><br>Attribute Length | Attribute value<br>Attribute Value | | | |
|---|---|---|---|---|---|
| | | Sub-attribute type<br>Sub-Attribute Type | Sub-attribute length<br>Sub-Attribute Length | Sub-attribute value<br><br>Sub-Attribute Value | Filled by |
| 60 | Two bytes | 1 | Eight bytes | Quantity of packets sent by the HAAP device by using the DSL tunnel | HAAP device |
| | | 2 | Eight bytes | Quantity of bytes of the packet sent by the HAAP device by using the DSL tunnel | |
| | | 3 | Eight bytes | Timetamp for sending the packet by the HAAP device by using the DSL tunnel | |
| | | 4 | Eight bytes | Timetamp for receiving the packet by the HAAP device by using the DSL tunnel | |
| | | 5 | Eight bytes | Quantity of packets received by the HG device by using the DSL tunnel | HG device |
| | | 6 | Eight bytes | Quantity of bytes of the packet received by the HG device by using the DSL tunnel | |
| | | 7 | Eight bytes | Timetamp for receiving the packet by the HG device by using the DSL tunnel | |
| | | 8 | Eight bytes | Timetamp for sending the packet by the HG device by using the DSL tunnel | |

(continued)

| Attribute type | Attribute length | Attribute value | | | | |
|---|---|---|---|---|---|---|
| | | Attribute Value | | | | |
| Attribute Type | Attribute Length | Sub-attribute type | Sub-attribute length | Sub-attribute value | | Filled by |
| | | Sub-Attribute Type | Sub-Attribute Length | Sub-Attribute Value | | |
| 61 | Two bytes | 1 | Eight bytes | Quantity of packets sent by the HAAP device by using the LTE tunnel | | HAAP device |
| | | 2 | Eight bytes | Quantity of bytes of the packet sent by the HAAP device by using the LTE tunnel | | |
| | | 3 | Eight bytes | Timetamp for sending the packet by the HAAP device by using the LTE tunnel | | |
| | | 4 | Eight bytes | Timetamp for receiving the packet by the HAAP device by using the LTE tunnel | | |
| | | 5 | Eight bytes | Quantity of packets received by the HG device by using the LTE tunnel | | HG device |
| | | 6 | Eight bytes | Quantity of bytes of the packet received by the HG device by using the LTE tunnel | | |
| | | 7 | Eight bytes | Timetamp for receiving the packet by the HG device by using the LTE tunnel | | |
| | | 8 | Eight bytes | Timetamp for sending the packet by the HG device by using the DSL tunnel | | |

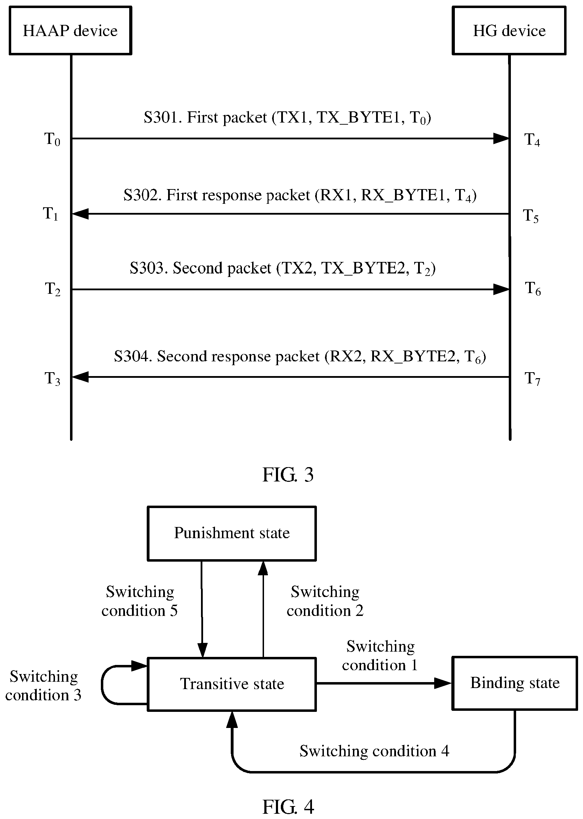

It can be learned from Table 1 that an attribute value field whose attribute type is 60 carries packet content used to perform link quality detection on the DSL tunnel, and an attribute value field whose attribute type is 61 carries packet content used to perform link quality detection on the LTE tunnel. An attribute value field corresponding to the attribute type 60 or 61 includes a plurality of sub-AVPs, and each sub-AVP is of a TLV format. The plurality of sub-AVPs may be used to respectively carry different packet content for link quality detection. For example, when the attribute type is 60, and the sub-attribute type is 1, the attribute value field carries the quantity of packets sent by the HAAP device by using the DSL tunnel, for example, TX1 or TX2 in FIG. 3. When the attribute type is 60, and the sub-attribute type is 2, the attribute value field carries the quantity of bytes of the packet sent by the HAAP device by using the DSL tunnel, for example, TX_BYTE 1 or TX_BYTE 2 in FIG. 3. When the attribute type is 60, and the sub-attribute type is 3, the attribute value field carries the timetamp for sending the packet by the HAAP device by using the DSL tunnel, for example, To or $T_1$ in FIG. 3.

It should be noted that quantities of sub-AVPs included in different attribute types and attributes of the sub-AVPs may be the same, or may be different. This is not particularly limited in this embodiment of this application. Information such as attribute types and attribute values of the plurality of sub-AVPs included in the different attribute types that is shown in Table 1 is merely an example. In this embodiment of this application, an attribute value field of an AVP may be further adjusted based on link quality information that needs to be detected.

A specific process of determining the link quality information by the HAAP device is described below with reference to a specific example shown in FIG. 3.

It should be noted that if only the link quality information of the DSL tunnel needs to be determined, the HAAP device and the HG device may send the link quality detection packet and the link quality detection response packet by using the DSL tunnel and in a manner shown in S301 to S304 in FIG. 3; or if only the link quality information of the LTE tunnel needs to be determined, the HAAP device and the HG device may send the link quality detection packet and the link quality detection response packet by using the LTE tunnel and in a manner shown in S301 to S304 in FIG. 3; or if the link quality information of the DSL tunnel and that of the LTE tunnel need to be determined, the HAAP device and the HG device may send the link quality detection packet and the link quality detection response packet by using the DSL tunnel and the LTE tunnel and in a manner shown in S301 to S304 in FIG. 3.

A process of performing S301 to S304 is described using an example in which the link quality information of the DSL tunnel is determined. It should be understood that determining the link quality information of the LTE tunnel is similar to determining the link quality information of the DSL tunnel. Details are not described herein.

In S301, the HAAP device sends a first packet to the HG device by using a DSL tunnel, where the first packet includes a quantity of bytes of a sent packet (TX_BYTE1), a quantity of packets that are sent (TX1), and information about a time (T0) for sending the first packet.

The first packet may be corresponding to the first link quality detection packet described above. The link quality detection packets sent by the HAAP device by using the DSL tunnel and the LTE tunnel may be corresponding to different attribute fields. When sending the link quality detection packet by using the DSL tunnel or the LTE tunnel, the HAAP device fills corresponding packet content into a corresponding attribute field. For example, the DSL tunnel is corresponding to an attribute field of an AVP 60, and the LTE tunnel is corresponding to an attribute field of an AVP 61. When sending the link quality detection packet by using the DSL tunnel, the HAAP device may make the attribute field of the AVP 60 filled. When sending the link quality detection packet by using the LTE tunnel, the HAAP device may make the attribute field of the AVP 61 filled. To-be-filled packet content is determined based on link quality information that needs to be determined.

In S302, the HG device returns a first response packet to the HAAP device by using the DSL tunnel, where the first response packet includes a quantity of bytes of a received packet (RX_BYTE1), a quantity of packets that are received (RX1), and information about a time (T4) for receiving the first packet.

The first response packet is used to indicate a status of receiving the first packet by the HG device, and the first response packet may be corresponding to the first link quality detection response packet described above. The link quality detection response packets returned by the HG device by using the DSL tunnel and the LTE tunnel may be corresponding to different attribute fields. When retuning the link quality detection response packet by using the DSL tunnel or the LTE tunnel, the HG device fills corresponding packet content into a corresponding attribute field. Details are not described herein.

In S303, the HAAP device sends a second packet to the HG device by using the DSL tunnel, where the second packet includes a quantity of bytes of a sent packet (TX_BYTE2), a quantity of packets that are sent (TX2), and information about a time (T2) for sending the second packet.

It should be understood that the second packet herein is similar to the foregoing first packet, and packet content carried in the second packet and packet content carried in the first packet may be the same, or may be different. In other words, TX_BYTE1 and TX1 that are carried in the first packet and TX_BYTE2 and TX2 that are carried in the second packet may be the same, or may be different.

In S304, the HG device returns a second response packet to the HAAP device by using the DSL tunnel, where the second response packet includes a quantity of bytes of a received packet (RX_BYTE2), a quantity of packets that are received (RX2), and information about a time (T6) for receiving the second packet.

It should be noted that the second response packet herein is similar to the foregoing first response packet, and details are not described herein. Packet content carried in the second response packet is used to indicate a receiving status of the second packet.

The HAAP device may determine the link quality information of the DSL tunnel based on a receiving status of a packet in at least two periods. Description is provided below using an example in which the HAAP device determines the throughput and the packet loss rate of the DSL tunnel based on a receiving status of a packet in two periods.

1. Throughput (Throughput)

$$\text{Throughput} = \frac{(\text{RX\_BYTE2} - \text{RX\_BYTE1}) * 8}{(T_6 - T_4)} \qquad (1)$$

To be specific, the throughput is obtained after a quantity of bytes of a packet received by the HG device in a previous period is subtracted from a quantity of bytes of a packet received by the HG device in a next period, a difference is multiplied by 8, and a product is divided by a difference between time for receiving the packet by the HG device in two periods.

2. Packet loss rate (PLR)

$$\text{PLR} = \frac{(\text{Tx2} - \text{Tx1}) - (\text{Rx2} - \text{Rx1})}{\text{Tx2} - \text{Tx1}} \qquad (2)$$

To be specific, the packet loss rate is obtained after a difference obtained by subtracting a quantity of packets received by the HG device in a previous period from a quantity of packets received by the HG device in a next period is subtracted from a difference obtained by subtracting a quantity of packets sent by the HAAP device in a previous period from a quantity of packets sent by the HAAP device in a next period, and a difference is divided by the difference obtained by subtracting the quantity of packets sent by the HAAP device in the previous period from the quantity of packets sent by the HAAP device in the next period.

Likewise, the HAAP device may calculate the link quality information of the LTE tunnel based on the foregoing formula (1) and formula (2).

If a difference between downlink one-way delays of the LTE tunnel and the DSL tunnel needs to be determined, the HAAP device may send the first packet by using both the DSL tunnel and the LTE tunnel, and further determine the difference T between the downlink one-way delays of the DSL tunnel and the LTE tunnel based on a formula (3):

$$T = \mid (T_{4\_}LTE - T_{4\_}DSL) \mid \qquad (3)$$

$T_4\_LTE$ is a time at which the HG device receives the first packet on the LTE tunnel, and $T_4\_DSL$ is a time at which the HG device receives the first packet on the DSL tunnel. The first packets sent by using the LTE tunnel and the DSL tunnel may be the same, or may be different. This is not limited in this embodiment of this application.

The above-listed method for calculating the link quality information of the DSL tunnel is merely an example instead of a limitation. Another method for calculating the link quality information of the DSL tunnel or the LTE tunnel is not excluded from this embodiment of this application, and falls within the protection scope of this application, provided that the HAAP device determines the target transmission mode based on the link quality information of the at least one of the DSL tunnel and the LTE tunnel.

In S203, the HAAP device determines a target transmission mode based on the determined link quality information of the at least one tunnel.

For example, the HAAP device may determine the target transmission mode based only on the link quality information of the DSL tunnel, or may determine the target transmission mode based only on the link quality information of the LTE tunnel, or may determine the target transmission mode based on the link quality information of the LTE tunnel and that of the DSL tunnel.

In a possible embodiment, S203 may specifically include:

determining the target transmission mode based on at least one of throughputs, packet loss rates, and downlink one-way delays of the DSL tunnel and the LTE tunnel.

For example, the HAAP device may determine the target transmission mode based only on the throughputs of the DSL tunnel and the LTE tunnel, or may determine the target transmission mode based on the throughputs of the DSL tunnel and the LTE tunnel and the downlink one-way delays of the DSL tunnel and the LTE tunnel, or may determine the target transmission mode based on the throughputs of the DSL tunnel and the LTE tunnel and the packet loss rate of the DSL tunnel.

It should be understood that in this embodiment of this application, the target transmission mode may be further determined based on other link quality parameters of the DSL tunnel and the LTE tunnel, and a transmission parameter that can be used to determine link quality of the DSL tunnel and the LTE tunnel may be used to determine the target transmission mode.

In an embodiment, the determining the target transmission mode based on at least one of throughputs, packet loss rates, and downlink one-way delays of the DSL tunnel and the LTE tunnel may specifically include:

determining, by the HAAP device, the target transmission mode based on a sum of the throughputs of the DSL tunnel and the LTE tunnel.

For example, when the sum of the throughputs (that is, an overall throughput) of the DSL tunnel and the LTE tunnel is greater than a throughput threshold, the HAAP device may determine that the target transmission mode is the bonding-tunnel transmission mode. In this case, it may be considered that quality of the LTE tunnel is relatively good, and a bonding tunnel may be used to provide a service for a user, so as to improve user experience. Alternatively, when an overall throughput of the DSL tunnel and the LTE tunnel is less than the throughput threshold, the HAAP device may determine that the target transmission mode is the DSL-only transmission mode.

It should be noted that the throughput threshold herein may be determined based on a rate limit value or a bandwidth threshold of the DSL tunnel. For example, the throughput threshold is the bandwidth threshold of the DSL tunnel, or the throughput threshold may be a value slightly greater than the bandwidth threshold of the DSL tunnel. The bandwidth threshold of the DSL tunnel is denoted as BW, and the throughput threshold may be BW, 1.05 BW, 1.1 BW, or the like. This is not particularly limited in this embodiment of this application.

Therefore, according to the packet transmission method in this aspect of the invention, the HAAP device can determine, based on the throughputs of the DSL tunnel and the LTE tunnel, the target transmission mode for transmitting a service packet. The throughput can accurately reflect link quality. Therefore, compared with determining of the target transmission mode simply based on an RTT, it reduces a false determining probability, and improves accuracy of a determined switching mode.

Alternatively, when the throughputs of the DSL tunnel and the LTE tunnel are greater than a throughput of the DSL tunnel, the HAAP device may determine that the bonding-tunnel transmission mode is used, and otherwise, the DSL-only transmission mode is used. If the throughputs of the DSL tunnel and the LTE tunnel are greater than the throughput of the DSL tunnel, it may be considered that joining of the LTE tunnel helps increase a shared bandwidth of the DSL tunnel and the LTE tunnel. Therefore, the bonding tunnel is used to provide the service for the user, so as to improve user experience. Otherwise, it may be considered that the link quality of the LTE tunnel is relatively poor, and joining of the LTE tunnel affects a bandwidth of the DSL tunnel instead of increasing a shared bandwidth of the DSL tunnel and the LTE tunnel. In this case, the HAAP device may transmit the service packet by using the DSL-only transmission mode, in other words, by disabling the LTE tunnel and using only the DSL tunnel, so as to ensure that performance of the DSL tunnel is not affected.

In other words, when the quality of the LTE tunnel is relatively poor, the HAAP device may transmit the service packet by using the DSL-only transmission mode, that is, by using only the DSL tunnel, so as to ensure that the performance of the DSL tunnel is not affected. When the link quality of the LTE tunnel is relatively good, the HAAP device transmits the service packet by using the bonding-tunnel transmission mode, that is, by using the bonding tunnel of the DSL tunnel and the LTE tunnel, so as to improve user experience.

In addition, in the bonding-tunnel transmission mode, the HAAP device may transmit the service packet by using a surplus LTE resource or an idle LTE resource, so as to prevent a mobile network service from being affected when the HAAP device transmits the service packet by using the LTE tunnel.

In another embodiment, the determining the target transmission mode based on at least one of throughputs, packet loss rates, and downlink one-way delays of the DSL tunnel and the LTE tunnel may specifically include:

when the sum of the throughputs of the DSL tunnel and the LTE tunnel is less than or equal to the bandwidth threshold of the DSL tunnel, and a difference between the downlink one-way delays of the DSL tunnel and the LTE tunnel is greater than a first delay threshold, determining that the target transmission mode is the single-tunnel transmission mode; or

when the sum of the throughputs of the DSL tunnel and the LTE tunnel is less than or equal to the bandwidth threshold of the DSL tunnel, and a difference between the downlink one-way delays of the DSL tunnel and the LTE tunnel is less than or equal to the first delay threshold, determining that the target transmission mode is the bonding-tunnel transmission mode.

The first delay threshold may be determined based on a reordering capability of a receive end of a packet. Optionally, the first delay threshold may be a reordering capability of a receive end, the first delay threshold may be a value slightly greater than a reordering capability of a receive end, or the like. This is not particularly limited in this embodiment of this application.

For example, if the packet is sent by the HAAP device to the HG device, the first delay threshold may be a reordering capability of the HG device, to be specific, a reordering delay difference of the HG device between the DSL tunnel and the LTE tunnel. If a reordering capability of the HG device on the DSL tunnel is 100 ms, and a reordering capability of the HG device on the LTE tunnel is 20 ms, the first delay threshold may be 80 ms or a value greater than 80 ms.

For another example, if the packet is sent by the HG device to the HAAP device, the first delay threshold may be a reordering capability of the HAAP device, to be specific, a reordering delay difference of the HAAP device between the DSL tunnel and the LTE tunnel. If a reordering capability of the HAAP device on the DSL tunnel is 50 ms, and a reordering capability of the HAAP device on the LTE tunnel is 10 ms, the first delay threshold may be 40 ms or a value greater than 40 ms.

In other words, in this embodiment, the HAAP device may comprehensively consider the throughputs and the downlink one-way delays of the DSL tunnel and the LTE tunnel, to determine the target transmission mode. When the sum of the throughputs of the DSL tunnel and the LTE tunnel is greater than the bandwidth threshold of the DSL tunnel, in other words, when the link quality of the LTE tunnel is relatively good, the HAAP device determines to transmit the service packet by using the bonding-tunnel transmission mode. When the sum of the throughputs of the DSL tunnel and the LTE tunnel is less than or equal to the bandwidth threshold of the DSL tunnel, the HAAP device may further determine, with reference to the difference between the downlink one-way delays of the DSL tunnel and the LTE tunnel, a transmission mode that is to be used. If the difference between the downlink one-way delays of the DSL tunnel and the LTE tunnel is less than or equal to the first delay threshold, it may be considered that a packet passing through the DSL tunnel and the LTE tunnel can be successfully reordered at a receive end of the packet. Therefore, the HAAP device may transmit the service packet by using the bonding transmission mode. If the difference between the downlink one-way delays of the DSL tunnel and the LTE tunnel is greater than the first delay threshold, it may be considered that a packet passing through the DSL tunnel and the LTE tunnel possibly cannot be successfully reordered at a receive end of the packet. In this case, the HAAP device may transmit the service packet by using the DSL-only transmission mode.

Therefore, according to the packet transmission method in this aspect of the invention, the HAAP device can determine, with reference to the throughputs and the difference between the downlink one-way delays of the DSL tunnel and the LTE tunnel, the target transmission mode for transmitting a service packet. Because the downlink one-way delay can more accurately reflect downlink link quality of the LTE tunnel, a false determining probability is reduced, to be specific, a switching mode determined with reference to the throughputs and the difference between the downlink one-way delays of the DSL tunnel and the LTE tunnel is more accurate.

In addition, according to the packet transmission method in this embodiment of this application, the throughputs and the difference between the downlink one-way delays of the DSL tunnel and the LTE tunnel are obtained by the HAAP in real time. The HAAP device can determine, based on the throughputs and the difference between the downlink one-way delays of the DSL tunnel and the LTE tunnel that are collected in real time, whether to switch a transmission mode. Therefore, a determined switching time is timelier. In other words, according to the packet transmission method in this embodiment of this application, the transmission mode can be accurately switched in a timely manner.

Optionally, in this embodiment with reference to the throughputs and the packet loss rates of the DSL tunnel and the LTE tunnel or with reference to the packet loss rates and the downlink one-way delays of the DSL tunnel and the LTE tunnel, the HAAP device may determine that the bonding transmission mode is used. For example, when the throughputs of the DSL tunnel and the LTE tunnel are greater than a specified throughput threshold, and a packet loss rate of the DSL tunnel is less than a specified packet loss rate threshold, the HAAP device may determine that the bonding-tunnel transmission mode is used, and otherwise, the DSL-only transmission mode is used. Alternatively, when a packet loss rate of the DSL tunnel is less than a specified packet loss rate threshold, and the difference between the downlink one-way delays of the DSL tunnel and the LTE tunnel is less than a specified delay threshold, the HAAP device determines that the bonding-tunnel transmission mode is used, and otherwise, the DSL-only transmission mode is used.

In a implementation, S203 may specifically include:

determining a target state of a state machine based on the link quality information of the at least one tunnel, where each state of the state machine is corresponding to a transmission mode; and
determining a transmission mode corresponding to the target state of the state machine as the target transmission mode for transmitting a service packet.

For example, the state machine includes a first state and a second state, and the states are corresponding to different link quality conditions. When the link quality information of the at least one tunnel meets a first condition, the HAAP device may determine that the target state of the state machine is the first state, to determine a transmission mode corresponding to the first state as the target transmission mode. Alternatively, when the link quality information of the at least one tunnel meets a second condition, the HAAP device determines that the target state of the state machine is the second state, to determine a transmission mode corresponding to the second state as the target transmission mode. If the transmission mode corresponding to the first state is the single-tunnel transmission mode, and the transmission mode corresponding to the second state is the bonding-tunnel transmission mode, the first condition is used to indicate that the link quality of the LTE tunnel or the DSL tunnel is relatively poor. To be specific, the link quality of one of the DSL tunnel and the LTE tunnel is relatively poor, and only the other tunnel can be used for packet transmission. The second condition may be used to indicate that overall link quality of the LTE tunnel and the DSL tunnel is better than the link quality of one of the DSL tunnel and the LTE tunnel. Therefore, the bonding tunnel may be used for packet transmission, so as to improve user experience.

The first condition may be that the throughputs of the DSL tunnel and the LTE tunnel are less than the throughput of the DSL tunnel, or the throughputs of the DSL tunnel and the LTE tunnel are less than the throughput of the LTE tunnel, in other words, link quality of one tunnel is better than that of the bonding tunnel. Therefore, the tunnel with better link quality may be used for packet transmission. The first condition may be that the throughputs of the DSL tunnel and the LTE tunnel are greater than the throughput of the DSL tunnel or the throughput of the LTE tunnel, in other words, link quality of the bonding tunnel is better than that of one tunnel. Therefore, the bonding tunnel may be used for packet transmission.

In an embodiment not covered by the claims , the determining a target state of a state machine based on the link quality information of the at least one tunnel includes:
determining, by the HAAP device, the target state of the state machine based on at least one of throughputs, packet loss rates, and downlink one-way delays of the DSL tunnel and the LTE tunnel.

To be specific, the HAAP device may determine the target state of the state machine with reference to at least one of a throughput, a packet loss rate, and a downlink one-way delay of the DSL tunnel, and at least one of a throughput, a packet loss rate, and a downlink one-way delay of the LTE tunnel.

Therefore, according to the packet transmission method in this embodiment not covered by the claims the HAAP device can comprehensively consider factors such as the throughputs, the packet loss rates, or the downlink one-way delays of the DSL tunnel and the LTE tunnel, to determine the target state of the state machine, and transmit the service packet by using a transmission mode corresponding to the target state, so as to reduce a false determining probability, and improve accuracy of a determined switching mode.

In addition, the foregoing link quality information is obtained by the HAAP device in real time. The HAAP device determines, based on the link quality information obtained in real time, whether to switch a transmission mode. Therefore, a determined switching time is timelier. In other words, according to the packet transmission method in this embodiment of this application, the transmission mode can be accurately switched in a timely manner.

It should be noted that in this embodiment not covered by the claims, the state machine may include the following main indicators:

1. An input state, to be specific, a current state of the state machine can reflect a transmission mode currently used by the HAAP device and the HG device to transmit a service packet, that is, the source transmission mode.
2. An input signal may be corresponding to the link quality information of the at least one tunnel that is described above.
3. An output state, to be specific, a target state to which the state machine is switched from the input state is corresponding to the target transmission mode.

It should further be noted that in this embodiment not covered by the claims, the state machine used to determine the target transmission mode may include a plurality of states. Each state may be corresponding to one or more switching conditions, and each switching condition is corresponding to a condition that needs to be met when the state machine is switched from a state to another state. When a switching condition is met, the HAAP device may switch a state of the state machine to a target state corresponding to the switching condition, to transmit the service packet by using a transmission mode corresponding to the target state machine. For example, if the state machine is currently in a first state, the HAAP device transmits the service packet by using a transmission mode corresponding to the first state. When link quality meets a switching condition, a state of the state machine is switched to a second state, and the HAAP device is switched to transmit the service packet by using a transmission mode corresponding to the second state.

The HAAP device uses the link quality information of the at least one tunnel that is collected in real time as the input signal of the state machine. When the link quality information of the at least one tunnel meets a specified switching condition, state transition of the state machine is performed. Therefore, the HAAP device can switch the state of the state machine in a timely manner based on the link quality information of the at least one tunnel, to switch the transmission mode. Compared with a prior-art switching mechanism, this shortens a switching delay.

The packet transmission method in this embodiment not covered by the claims, is described below using an example in which the state of the state machine includes a first state, a second state, and a third state. However, this shall not constitute any limitation on this embodiment of this application. The state machine in this embodiment not covered by the claims, may further include more states or fewer states. One or more switching conditions corresponding to each state may be further adjusted based on a specific case, and a switching condition 1 to a switching condition 5 that are listed in the following embodiment are merely an example for description.

FIG. 4 is a state transition diagram of a state machine according to an embodiment not covered by the claims. A specific implementation process of determining a transmission mode by the HAAP device based on the state machine is described below with reference to FIG. 4 by using an example in which the first state is a transitive state, the second state is a binding state, and the third state is a punishment state.

It is assumed herein that the transitive state and the binding state are corresponding to the bonding-tunnel transmission mode, the punishment state may be corresponding to the DSL-only transmission mode, and the punishment state may also be referred to as a DSL-only state.

It should be noted that in the three states of the state machine, the binding state and the punishment state may be considered as a formal working state, and in the binding state and the punishment state, the HAAP device may transmit a service by using a corresponding transmission mode; the transitive state may be considered as an intermediate state, and when the state machine is in the transitive state, the HAAP device mainly performs link quality detection, to determine a working state that is to be entered.

1. The state machine is currently in the transitive state, to be specific, the HAAP device currently transmits the service packet by using the bonding-tunnel transmission mode or the DSL-only transmission mode.

When the state machine is in the transitive state, the input signal of the state machine may be the link quality information of the DSL tunnel and the LTE tunnel, to be specific, the HAAP device may determine the output state of the state machine based on the link quality information of the DSL tunnel and the LTE tunnel, in other words, determine a working state to which the state machine is to be switched.

For example, the HAAP device may detect the link quality information such as throughputs and downlink one-way delays of the DSL tunnel and the LTE tunnel based on a specified period, and then determine the output state of the state machine with reference to the link quality information such as the throughputs and the downlink one-way delays of the DSL tunnel and the LTE tunnel.

(1) When the link quality information of the DSL tunnel and the LTE tunnel meets a switching condition 1, the HAAP device may determine that the output state of the state machine is the binding state.

That the link quality information of the DSL tunnel and the LTE tunnel meets the switching condition 1 may be used to indicate that the link quality of the LTE tunnel is relatively good. Therefore, the HAAP device may switch the state machine from the transitive state to the binding state, and transmit the service packet by using the bonding-tunnel transmission mode corresponding to the binding state, so as to improve user experience.

Optionally, the switching condition 1 may include: a sum of the throughputs of the DSL tunnel and the LTE tunnel is greater than a rate limit value of the DSL tunnel, or may be another determining condition that can represent that the link quality of the LTE tunnel is relatively good.

(2) When the link quality information of the DSL tunnel and the LTE tunnel meets a switching condition 2, the HAAP device may determine that the output state of the state machine is the punishment state.

That the link quality information of the DSL tunnel and the LTE tunnel meets the switching condition 2 may be used to indicate that the link quality of the LTE tunnel is quite poor. The HAAP device may switch the state machine from the transitive state to the punishment (Punishment) state, to transmit the service packet by using the DSL-only transmission mode corresponding to the punishment state.

Optionally, the switching condition 2 may include: an overall throughput of the DSL tunnel and the LTE tunnel is not greater than a rate limit value of the DSL tunnel, and a difference between downlink delays of the LTE tunnel and the DSL tunnel is greater than the foregoing first delay threshold, or may be another determining condition indicating that the link quality of the LTE tunnel is quite poor.

The overall throughput of the DSL tunnel and the LTE tunnel is not greater than the rate limit value of the DSL tunnel, and the difference between the downlink delays of the LTE tunnel and the DSL tunnel is greater than the foregoing first delay threshold. Therefore, it may be considered that the packet cannot be successfully reordered at a receive end when being transmitted on the two tunnels, and the overall throughput of the two tunnels is less than the throughput of the DSL tunnel because of joining of the LTE tunnel. Therefore, the HAAP device may disable the LTE tunnel, and transmit the packet by using only the DSL tunnel, so as to help avoid impact of the LTE tunnel on performance of the DSL tunnel.

(3) When the link quality information of the DSL tunnel and the LTE tunnel meets a switching condition 3, the HAAP device may determine that the output state of the state machine is the transitive state, in other words, the state machine keeps in the transitive state.

Optionally, the switching condition 3 may include: an overall throughput of the DSL tunnel and the LTE tunnel is less than a detection threshold, to be specific, the overall throughput of the DSL tunnel and the LTE tunnel is quite small and inadequate for determining. The HAAP device needs to perform link quality detection again, and then determines a state to switch to.

Alternatively, the switching condition 3 may include: an overall throughput of the DSL tunnel and the LTE tunnel is less than the throughput of the DSL tunnel, and a difference between the downlink one-way delays of the DSL tunnel and the LTE tunnel is less than or equal to the first delay threshold. Under this condition, the packet transmitted by using the two tunnels can be successfully reordered at the receive end of the packet. Therefore, the packet can be transmitted by using the bonding-tunnel transmission mode.

Generally, when the overall throughput of the DSL tunnel and the LTE tunnel is greater than the bandwidth threshold of the DSL tunnel, the HAAP device may switch the state machine to the binding state, and transmit the packet by using the bonding-tunnel transmission mode. When the overall throughput of the DSL tunnel and the LTE tunnel is less than or equal to the bandwidth threshold of the DSL tunnel, the HAAP device may further determine the difference between the downlink one-way delays of the DSL tunnel and the LTE tunnel, and determine, based on the difference between the downlink one-way delays, a target state to which the state machine is to be switched. If the difference between the downlink one-way delays is greater than the first delay threshold, the HAAP device switches the state machine to the punishment state, and transmits the packet by using the DSL-only transmission mode. When the difference between the downlink one-way delays is less than or equal to the first delay threshold, the HAAP device keeps the state machine in the transitive state, and continues to perform link quality detection, to determine a target state to which the state machine is to be switched.

Therefore, according to the packet transmission method in this embodiment, the HAAP device may use the throughputs of the DSL tunnel and the LTE tunnel as a primary determining condition. When the overall throughput of the DSL tunnel and the LTE tunnel is greater than the bandwidth threshold of the DSL tunnel, in other words, the link quality of the LTE tunnel is relatively good, the bonding-tunnel transmission mode is used to provide a large-bandwidth access service for a user, so as to improve user experience. When the overall throughput of the DSL tunnel and the LTE tunnel is less than or equal to the bandwidth threshold of the DSL tunnel, the HAAP device further performs determining with reference to the difference between the downlink one-way delays of the DSL tunnel and the LTE tunnel. When the difference between the downlink one-way delays is greater than the first delay threshold, the DSL-only transmission mode is used. This helps prevent performance of the DSL tunnel from being affected when the bonding-tunnel transmission mode continues to be used when the link quality of the LTE tunnel is relatively poor.

2. The state machine is in the binding state, to be specific, the HAAP device currently transmits the service packet by using the bonding-tunnel transmission mode.

In this case, the input signal of the state machine may be the link quality information of the DSL tunnel and the LTE tunnel. In other words, the HAAP device may detect the link quality information of the DSL tunnel and the LTE tunnel, and then may determine the output state of the state machine based on the link quality information of the DSL tunnel and the LTE tunnel, to be specific, determine whether to keep the state machine in a current state or switch the state machine to another state.

For example, when the link quality information of the DSL tunnel and the LTE tunnel meets a switching condition 4, the HAAP device may determine that the output state of the state machine is the transitive state.

The switching condition 4 is used to indicate that the link quality of the LTE tunnel is relatively poor and may affect performance of the DSL tunnel. Therefore, the HAAP device may switch the state machine from the binding state to the transitive state, and further determine the link quality, to determine a target state to which the state machine is to be switched.

Optionally, the switching condition 4 may include: the throughputs of the DSL tunnel and the LTE tunnel are not greater than the bandwidth threshold of the DSL tunnel, and the difference between the downlink one-way delays of the DSL tunnel and the LTE tunnel is greater than a second delay threshold.

It should be noted that the second delay threshold and the foregoing first delay threshold may be the same, or may be different. For example, the HAAP device may set the first delay threshold to be less than the second delay threshold. In other words, the link quality of the LTE tunnel when the switching condition 1 is met is better than the link quality of the LTE tunnel when the switching condition 4 is met. To be specific, a requirement for entering the binding state by the state machine may be set to be higher than that for exiting the binding state, or a difficulty of exiting the binding state is higher than that of entering the binding state. This helps maintain stability of the state machine.

Optionally, if determining, based on the detected link quality of the DSL tunnel and the LTE tunnel, that the link quality of the LTE tunnel is relatively good, the HAAP may continue to provide an access service of HA. The HAAP device may keep the state machine in the binding state, and continue to transmit the service packet by using the bonding-tunnel transmission mode.

For example, when the throughputs of the DSL tunnel and the LTE tunnel are greater than the bandwidth threshold of the DSL tunnel, or when the difference between the downlink one-way delays of the DSL tunnel and the LTE tunnel is less than or equal to the second delay threshold, the HAAP device may determine to keep the state machine in the binding state.

3. The state machine is in the punishment state. In this state, the HAAP device may transmit the packet to the HG device by using the DSL-only transmission mode.

In this state, the input signal of the state machine may be a timer, in other words, the HAAP device may switch the state machine to another state when counting of the timer ends.

Optionally, when a switching condition 5 is met, the HAAP device may determine to switch the state machine to the transitive state. The switching condition 5 may be that a time during which the state machine keeps in the punishment state reaches a first time threshold. Therefore, the switching condition 5 is equivalent to a timer, and a counting value of the timer may be the first time threshold. In this case, the HAAP may not perform link quality detection on the DSL tunnel, and directly switches the state machine to the transitive state regardless of the link quality of the DSL tunnel after the timer expires.

Therefore, the HAAP device may control enabling or disabling of the LTE tunnel based on the state machine. When there is a surplus LTE resource or an idle LTE resource, the HAAP device provides user experience of the HA by using the LTE resource. When there is no idle LTE resource, the HAAP device provides a service by using only the DSL tunnel, so as to avoid impact on a user service in a live network.

In terms of an execution body, in the prior art, the HG device determines the target transmission mode for transmitting a service packet. After determining a transmission mode that is to be used, the HG device notifies the HAAP device. The HAAP device performs tunnel switching. Consequently, there is a relatively long delay from determining the target transmission mode to switching to the target transmission mode. In this embodiment of this application, the HAAP device determines the target transmission mode. After determining the target transmission mode, the HAAP device may directly perform tunnel switching, so as to shorten a switching delay.

In addition, according to the packet transmission method in this embodiment not covered by the claims, the HAAP device can collect the link quality information of the LTE tunnel and the DSL tunnel in real time, and then determine, based on the link quality information of the LTE tunnel and the DSL tunnel that is collected in real time, whether to switch a transmission mode. Therefore, the transmission mode can be switched in a timely manner. In addition, the HAAP device can determine, with reference to the throughputs, the packet loss rates, or the downlink one-way delays, a target transmission mode that is to be used. Therefore, the determined target transmission mode is more accurate. In other words, according to the packet transmission method in this embodiment not covered by the claims, the transmission mode can be accurately switched in a timely manner.

Therefore, according to the packet transmission method in this embodiment not covered by the claims, when the link quality of the LTE tunnel is relatively poor, the HAAP device can control disabling of the LTE tunnel, and use the DSL-only transmission mode instead, so as to prevent performance of the DSL tunnel from being affected when the bonding-tunnel transmission mode continues to be used when the link quality of the LTE tunnel is relatively poor. In addition, when the link quality of the LTE tunnel is relatively good, the HAAP device enables the LTE tunnel, and provides the access service of the HA, so as to improve user experience.

A process of determining the target transmission mode by the HAAP device based on the state machine is described above with reference to FIG. 4. After determining the target transmission mode, the HAAP device further switches the source transmission mode to the target transmission mode in S204.

In S205, the HAAP device transmits a service packet to the HG device by using the target transmission mode.

It should be understood that if the source transmission mode is the DSL-only transmission mode, and the target transmission mode is the bonding-tunnel transmission mode, in S204, the HAAP device needs to perform tunnel switching, enables the LTE tunnel, and switches the DSL-only transmission mode to the bonding-tunnel transmission mode; or if the source transmission mode is the bonding-tunnel transmission mode, and the target transmission mode is the DSL-only tunnel transmission mode, the HAAP device needs to perform tunnel switching, disables the LTE tunnel, and switches the bonding-tunnel transmission mode to the DSL-only transmission mode.

It should be noted that if the source transmission mode and the target transmission mode are the same, to be specific, both are the DSL-only transmission mode or the bonding-tunnel transmission mode, the HAAP device may not perform tunnel switching, to be specific, may not perform S204.

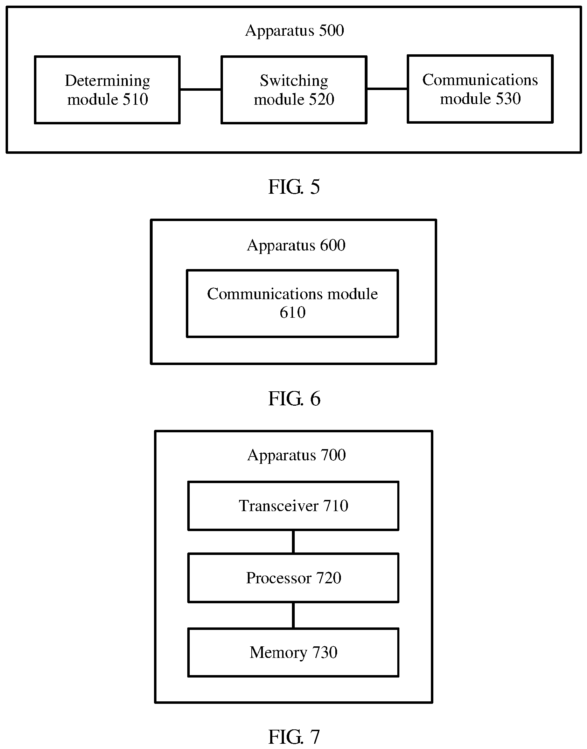

FIG. 5 is a schematic block diagram of a packet transmission apparatus 500 according to an embodiment of this invention. The apparatus 500 is used as a first network device and includes:

a determining module 510, configured to determine, based on link quality information of at least one of a first tunnel and a second tunnel, a target transmission mode for transmitting a service packet, where the target transmission mode is a bonding-tunnel transmission mode or a single-tunnel transmission mode, the bonding-tunnel transmission mode is to transmit a service packet by using the first tunnel and the second tunnel, the single-tunnel transmission mode is to transmit a service packet by using the first tunnel or the second tunnel, the first tunnel is a fixed network tunnel, and the second tunnel is a mobile network tunnel;

a switching module 520, configured to switch a transmission mode currently used for packet transmission to the target transmission mode; and

a communications module 530, configured to transmit a service packet to a second network device by using the target transmission mode.

In a possible embodiment, the determining module 510 is further configured to: determine the link quality information of the at least one of the first tunnel and the second tunnel.

In a possible embodiment, the communications module 530 is further configured to:

periodically send a link quality detection packet to the second network device by using the at least one tunnel; and

receive a link quality detection response packet periodically returned, by using the at least one tunnel, by the second network device; and

the determining module 510 is further configured to:

determine the link quality information of the at least one tunnel at least based on the link quality detection response packet.

In a possible embodiment, the at least one tunnel includes the first tunnel, the link quality detection packet includes a first link quality detection packet sent by the apparatus by using the first tunnel, and the first link quality detection packet includes at least one of the following:

a quantity of packets sent by the apparatus by using the first tunnel, a quantity of bytes included in the sent packet, and information about a time for sending the first link quality detection packet; and

the link quality detection response packet includes a first link quality detection response packet returned by the second network device by using the first tunnel, and the first link quality detection response packet includes at least one of the following:

a quantity of packets received by the second network device by using the first tunnel, a quantity of bytes included in the received packet, and information about a time for receiving the first link quality detection packet.

In a possible embodiment, not covered by the claims, the first link quality detection packet is a first GRE control message, the first GRE control message includes a first attribute-value pair AVP corresponding to the first tunnel, and the first AVP is used to carry at least one of the quantity of packets sent by the apparatus by using the first tunnel, the quantity of bytes included in the sent packet, and the information about a time for sending the first link quality detection packet; and

the first link quality detection response packet is a second GRE control message, the second GRE control message includes a second AVP corresponding to the first tunnel, and the second AVP is used to carry at least one of the quantity of packets received by the second network device by using the first tunnel, the quantity of bytes included in the received packet, and the information about a time for receiving the first link quality detection packet.

In a possible embodiment, the at least one tunnel includes the second tunnel, the link quality detection packet includes a second link quality detection packet sent by the apparatus by using the second tunnel, and the second link quality detection packet includes at least one of the following:

a quantity of packets sent by the apparatus by using the second tunnel, a quantity of bytes included in the sent packet, and information about a time for sending the second link quality detection packet; and

the link quality detection response packet includes a second link quality detection response packet returned by the second network device by using the second tunnel, and the second link quality detection response packet includes at least one of the following:

a quantity of packets received by the second network device by using the second tunnel, a quantity of bytes included in the received packet, and information about a time for receiving the second link quality detection packet.

In a possible embodiment, not covered by the claims, the second link quality detection packet is a third GRE control message, the third GRE control message includes a third AVP corresponding to the second tunnel, and the third AVP is used to carry at least one of the quantity of packets sent by the apparatus by using the second tunnel, the quantity of bytes included in the sent packet, and the information about a time for sending the second link quality detection packet; and

the second link quality detection response packet is a fourth GRE control message, the fourth GRE control message includes a fourth AVP corresponding to the second tunnel, and the fourth AVP is used to carry at least one of the quantity of packets received by the second network device by using the second tunnel, the quantity of bytes included in the received packet, and the information about a time for receiving the second link quality detection packet.

In a possible embodiment, the determining module 510 is specifically configured to:
determine the target transmission mode based on at least one of throughputs, packet loss rates, and downlink one-way delays of the first tunnel and the second tunnel.

In a possible embodiment, the determining module 510 is specifically configured to:

when a sum of the throughputs of the first tunnel and the second tunnel is greater than a bandwidth threshold of the first tunnel, determine that the target transmission mode is the bonding-tunnel transmission mode; or

when a sum of the throughputs of the first tunnel and the second tunnel is less than or equal to a bandwidth threshold of the first tunnel, determine that the target transmission mode is the single-tunnel transmission mode.

In a possible embodiment, the determining module 510 is specifically configured to:

when the sum of the throughputs of the first tunnel and the second tunnel is less than or equal to the bandwidth threshold of the first tunnel, and a difference between the downlink one-way delays of the first tunnel and the second tunnel is greater than a first delay threshold, determine that the target transmission mode is the single-tunnel transmission mode; or

when the sum of the throughputs of the first tunnel and the second tunnel is less than or equal to the bandwidth threshold of the first tunnel, and a difference between the downlink one-way delays of the first tunnel and the second tunnel is less than or equal to the first delay threshold, determine that the target transmission mode is the bonding-tunnel transmission mode.

In a possible embodiment, the determining module 510 is further configured to:

determine a target state of a state machine based on the link quality information of the at least one tunnel, where each state of the state machine is corresponding to a transmission mode; and

determine a transmission mode corresponding to the target state as the target transmission mode for transmitting a service packet.

In a possible embodiment, the determining module 510 is further configured to:
determine the target state of the state machine based on at least one of throughputs, packet loss rates, and downlink one-way delays of the first tunnel and the second tunnel.

It should be understood that the apparatus 500 in this embodiment of this application may be corresponding to the HAAP device in the packet transmission method 200 in the embodiment of this application, and the foregoing and other operations and/or functions of the modules in the apparatus 500 are respectively intended to implement the corresponding procedures corresponding to the HAAP device in FIG. 2. For brevity, details are not described herein.

FIG. 6 is a schematic block diagram of a packet transmission apparatus 600 according to another embodiment of this application. The apparatus 600 is used as a second network device and includes:
a communications module 610, configured to: receive a link quality detection packet periodically sent, by using at least one of a first tunnel and a second tunnel, by a first network device, and periodically return a link quality detection response packet to the first network device by using the at least one tunnel, where the link quality detection response packet is used by the first network device to determine a target transmission mode for transmitting a service packet to the apparatus.

In a possible embodiment, the at least one tunnel includes the first tunnel, the link quality detection packet includes a first link quality detection packet sent by the first network device by using the first tunnel, and the first link quality detection packet includes at least one of the following:

a quantity of packets sent by the first network device by using the first tunnel, a quantity of bytes included in the sent packet, and information about a time for sending the first link quality detection packet; and

the link quality detection response packet includes a first link quality detection response packet returned by the apparatus by using the first tunnel, and the first link quality detection response packet includes at least one of the following:
a quantity of packets received by the apparatus by using the first tunnel, a quantity of bytes included in the received packet, and information about a time for receiving the first link quality detection packet.

In a possible embodiment, the first link quality detection packet is a first GRE control message, the first GRE control message includes a first attribute-value pair AVP corresponding to the first tunnel, and the first AVP is used to carry at least one of the quantity of packets sent by the first network device by using the first tunnel, the quantity of bytes included in the sent packet, and the information about a time for sending the first link quality detection packet; and
the first link quality detection response packet is a second GRE control message, the second GRE control message includes a second AVP corresponding to the first tunnel, and the second AVP is used to carry at least one of the quantity of packets received by the apparatus by using the first tunnel, the quantity of bytes included in the received packet, and the information about a time for receiving the first link quality detection packet.

In a possible embodiment, the at least one tunnel includes the second tunnel, the link quality detection packet includes a second link quality detection packet sent by the first network device by using the second tunnel, and the second link quality detection packet includes at least one of the following:

a quantity of packets sent by the first network device by using the second tunnel, a quantity of bytes included in the sent packet, and information about a time for sending the second link quality detection packet; and

the link quality detection response packet includes a second link quality detection response packet returned by the apparatus by using the second tunnel, and the second link quality detection response packet includes at least one of the following:
a quantity of packets received by the apparatus by using the second tunnel, a quantity of bytes included in the received packet, and information about a time for receiving the second link quality detection packet.

In a possible embodiment, not covered by the claims, the second link quality detection packet is a third GRE control message, the third GRE control message includes a third AVP corresponding to the second tunnel, and the third AVP is used to carry at least one of the quantity of packets sent by the first network device by using the second tunnel, the quantity of bytes included in the sent packet, and the information about a time for sending the second link quality detection packet; and
the second link quality detection response packet is a fourth GRE control message, the fourth GRE control message includes a fourth AVP corresponding to the second tunnel, and the fourth AVP is used to carry at least one of the quantity of packets received by the apparatus by using the second tunnel, the quantity of bytes included in the received packet, and the information about a time for receiving the second link quality detection packet.

It should be understood that the apparatus 600 in this embodiment of this application may be corresponding to the HG device in the packet transmission method 200 in the embodiment of this application, and the foregoing and other operations and/or functions of the modules in the apparatus 600 are respectively intended to implement the corresponding procedures corresponding to the HG device in FIG. 2. For brevity, details are not described herein.

As shown in FIG. 7, an embodiment of this application further provides a packet transmission apparatus 700. The apparatus 700 includes a transceiver 710, a processor 720, and a memory 730. The transceiver 710, the processor 720, and the memory 730 are communicatively connected. The memory 730 is configured to store an instruction. The processor 720 is configured to execute the instruction stored in the memory 730, to control the transceiver 710 to receive and send a signal or information. The memory 730 may be disposed in the processor 720, or may be independent of the processor 720.

Specifically, the apparatus 700 may be corresponding to the HAAP device in the embodiments corresponding to FIG. 2 and FIG. 3, and the processor 720, the transceiver 710, and the like in the apparatus 700 may implement functions of the HAAP device and/or various steps and methods implemented by the HAAP device in the embodiments corresponding to FIG. 2 and FIG. 3. The processor 720 is configured to perform all operations of the determining module 510 and the switching module 520 of the apparatus 500 in FIG. 5, and the transceiver 710 is configured to perform all operations of the communications module 530 of the apparatus 500 in FIG. 5. For brevity, details are not described herein.

It should be noted that a virtual first network device may be implemented in this embodiment not covered by the claims, based on a general purpose physical server and with reference to a network functions virtualization (Network Function Virtualization, NFV) technology. The virtual first network device may be a virtual machine (Virtual Machine, VM) running a program that is used to determine a target transmission mode based on link quality information and switch a currently used transmission mode to the target transmission mode. The virtual machine is deployed on a hardware device (for example, a physical server). The virtual machine is a complete computer system that is simulated by using software, has functions of a complete hardware system, and runs in a completely isolated environment.

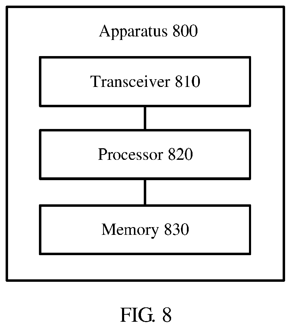

As shown in FIG. 8, an embodiment further provides a packet transmission apparatus 800. The apparatus 800 includes a transceiver 810. Optionally, the apparatus 800 may further include a processor 820 and a memory 830. The transceiver 810, the processor 820, and the memory 830 are communicatively connected. The memory 830 is configured to store an instruction. The processor 820 is configured to execute the instruction stored in the memory 830, to control the transceiver 810 to receive and send a signal or information. The memory 830 may be disposed in the processor 820, or may be independent of the processor 820.

Specifically, the apparatus 800 may be corresponding to the HG device in the embodiments corresponding to FIG. 2 and FIG. 3, and the processor 820, the transceiver 810, and the like in the apparatus 800 may implement functions of the HG device and/or various steps and methods implemented by the HG device in the embodiments corresponding to FIG. 2 and FIG. 3. The transceiver 810 is configured to perform all operations of the communications module 610 of the apparatus 600 in FIG. 6. For brevity, details are not described herein.

It should be noted that a virtual second network device may be implemented in this embodiment based on a general purpose physical server and with reference to a network functions virtualization (Network Function Virtualization, NFV) technology. The virtual second network device may be a virtual machine (Virtual Machine, VM) running a program that is used to implement link quality detection by cooperating with a virtual first network device. The virtual machine is deployed on a hardware device (for example, a physical server). The virtual machine is a complete computer system that is simulated by using software, has functions of a complete hardware system, and runs in a completely isolated environment.

It should be understood that the processor in this embodiment not covered by the claims may be an integrated circuit chip, and has a signal processing capability. In an implementation process, steps in the foregoing method embodiments may be completed by using an integrated logic circuit of hardware in the processor, or by using instructions in a form of software. The processor may be a central processing unit (Central Processing Unit, CPU), or the processor may be another general purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or a transistor logic device, or a discrete hardware component. The methods, steps, and logical block diagrams disclosed in the embodiments of this application may be implemented or performed. The general purpose processor may be a microprocessor, the processor may be any conventional processor, or the like. The steps in the method disclosed with reference to the embodiments of this application may be directly performed by a hardware decoding processor, or may be performed by using a combination of hardware in the decoding processor and a software module. The software module may be in a mature storage medium in the art, for example, a random access memory, a flash memory, a read-only memory, a programmable read-only memory or an electrically erasable programmable memory, or a register. The storage medium is in the memory, and the processor reads information in the memory and completes the steps in the foregoing method with reference to hardware of the processor.

It should further be understood that the memory may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. According to description used as an example instead of a limitation, RAMs of a plurality of forms are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the system and the method described in this specification is intended to include without limitation to these memories and a memory of any other proper type.

In an implementation process, steps in the foregoing method may be completed by using an integrated logic circuit of hardware in the processor, or by using instructions in a form of software. The steps in the packet transmission method disclosed with reference to the embodiments of this application may be directly performed by a hardware processor, or may be performed by using a combination of hardware in the processor and a software module. The software module may be in a mature storage medium in the art, for example, a random access memory, a flash memory, a read-only memory, a programmable read-only memory or an electrically erasable programmable memory, or a register. The storage medium is in the memory, and the processor reads information in the memory and completes the steps in the foregoing method with reference to hardware of the processor. To avoid repetition, details are not described herein.

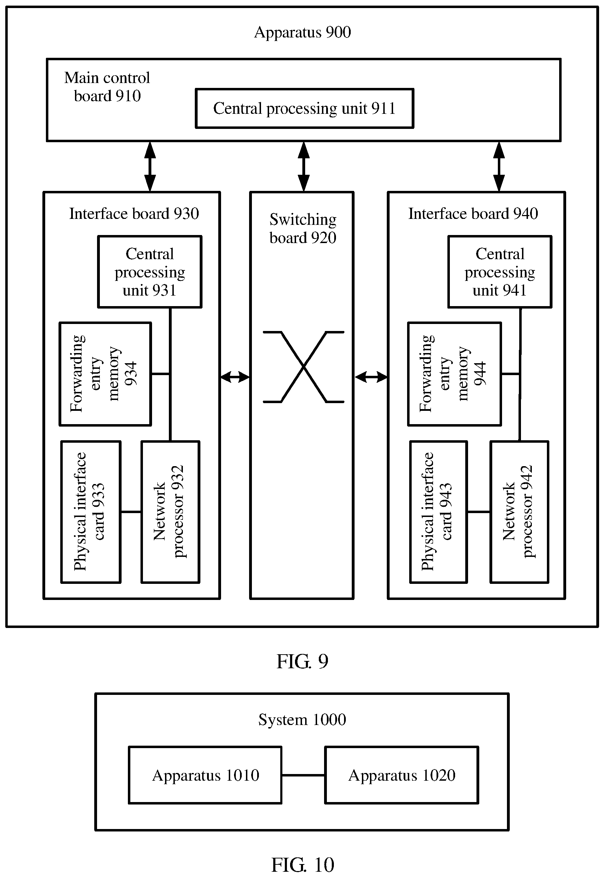

FIG. 9 is a possible schematic structural diagram of a packet transmission apparatus according to an embodiment not covered by the claims . As shown in FIG. 9, the apparatus 900 includes a main control board 910, an interface board 930, a switching board 920, and an interface board 940. The main control board 910 is configured to complete functions such as system management, device maintenance, and protocol processing. The switching board 920 is configured to complete data exchange between interface boards (the interface board is also referred to as a line card or a service board). The interface boards 930 and 940 are configured to: provide various service interfaces (for example, a POS interface, a GE interface, and an ATM interface), and forward a data packet. The main control board 910, the interface boards 930 and 940, and the switching board 920 connect to a system backplane by using a system bus for interworking. A central processing unit 931 on the interface board 930 is configured to: control and manage the interface board, and communicate with a central processing unit 911 on the main control board 910.

The central processing unit 911 on the main control board 910 is configured to send a link quality detection packet to the central processing unit 931 on the interface board 930, and the central processing unit 931 is configured to send a link quality detection packet to a second network device by using an interface on a physical interface card 933. The interface on the physical interface card 933 is configured to receive a link quality detection response packet returned by the second network device, and the central processing unit 931 on the interface board 930 is configured to send the link quality detection response packet to the central processing unit 911 on the main control board 910. The central processing unit 911 on the main control board 910 may be configured to determine, based on link quality information of at least one tunnel, a target transmission mode for transmitting a packet. (For a specific process, refer to the related descriptions in the embodiments in FIG. 2 and FIG. 3, and details are not described herein again.)

The central processing unit 911 on the main control board 910 may be further configured to: calculate a forwarding entry of the target transmission mode, and deliver the forwarding entry of the target transmission mode to a forwarding entry memory 934 on the interface board 930. A network processor 932 on the interface board 930 may be configured to: instruct to search the forwarding entry memory 934, and instruct, based on a search result, to forward a data packet based on the target transmission mode.

It should be understood that an operation on the interface board 940 is consistent with an operation on the interface board 930 in this embodiment of this application. For brevity, details are not described. It should be understood that the apparatus 900 in this embodiment may be corresponding to the first network device in the embodiments corresponding to FIG. 2 and FIG. 3, and the main control board 910 and the interface board 930 and/or 940 in the apparatus 900 may implement functions of the first network device and/or steps implemented by the first network device in the embodiments corresponding to FIG. 2 and FIG. 3. For brevity, details are not described herein.

It should be noted that there may be one or more main control boards. When there are a plurality of main control boards, a primary main control board and a secondary main control board may be included. There may be one or more interface boards, and a stronger data processing capability of the first network device indicates more provided interface boards. There may be one or more physical interface cards on the interface board. There may be no switching board, or there may be one or more switching boards. When there are a plurality of switching boards, load sharing and redundancy backup may be jointly implemented. In a centralized forwarding architecture, the first network device may not require the switching board, and the interface board implements a service data processing function in the entire system. In a distributed forwarding architecture, the first network device may have at least one switching board, and implement data exchange between a plurality of interface boards by using the switching board, to provide a large-capacity data exchange and processing capability. Therefore, a data access and processing capability of a gateway device in the distributed architecture is better than that of a device in the centralized architecture. A specific architecture that is to be used depends on a specific networking deployment scenario. This is not limited herein.

As shown in FIG. 10, an embodiment of this invention further provides a packet transmission system 1000. The system 1000 includes an apparatus 1010 and an apparatus 1020. The apparatus 1010 is corresponding to the apparatus 500, the apparatus 700, the virtual first network device, or the apparatus 900 in the embodiments of this application, and the apparatus 1020 is corresponding to the apparatus 600, the apparatus 800, or the virtual second network device in the embodiments of this application.

An embodiment of this application further provides a computer readable storage medium. The computer readable storage medium stores one or more programs, and the one or more programs include an instruction. When executed by a portable electronic device that includes a plurality of application programs, the instruction enables the portable electronic device to perform the method in the embodiments shown in FIG. 2 and FIG. 3.

An embodiment of this application further provides a computer program product. The computer program product includes an instruction. When executed by a computer, the computer program enables the computer to execute the corresponding procedures of the method in the embodiments shown in FIG. 2 and FIG. 3.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

In addition, functional units in the embodiments may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments. These embodiments are however not covered by the claims. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

## Claims

1. A packet transmission method for using in a hybrid access technology, comprising:

    determining, by a first network device based on link quality information of at least one of a first tunnel and a second tunnel, a target transmission mode for transmitting a service packet, wherein the target transmission mode is a bonding-tunnel transmission mode or a single-tunnel transmission mode, the bonding-tunnel transmission mode is to transmit a service packet by using the first tunnel and the second tunnel, the single-tunnel transmission mode is to transmit a service packet by using the first tunnel or the second tunnel, the first tunnel is a fixed network tunnel, and the second tunnel is a mobile network tunnel;

switching, by the first network device, a transmission mode currently used for packet transmission to the target transmission mode; and

transmitting, by the first network device, a service packet to a second network device by using the target transmission mode;

wherein the determining, by a first network device based on link quality information of at least one of a first tunnel and a second tunnel, a target transmission mode for transmitting a service packet includes: determining the target transmission mode based on at least one of throughputs, packet loss rates, and downlink one-way delays of the first tunnel and the second tunnel.

2. The method according to claim 1, wherein the determining the target transmission mode based on at least one of throughputs, packet loss rates, and downlink one-way delays of the first tunnel and the second tunnel includes:

when a sum of the throughputs of the first tunnel and the second tunnel is greater than a bandwidth threshold of the first tunnel, determining that the target transmission mode is the bonding-tunnel transmission mode; or
when a sum of the throughputs of the first tunnel and the second tunnel is less than or equal to a bandwidth threshold of the first tunnel, determining that the target transmission mode is the single-tunnel transmission mode.

3. The method according to claim 1, wherein the determining the target transmission mode based on at least one of throughputs, packet loss rates, and downlink one-way delays of the first tunnel and the second tunnel includes:

when the sum of the throughputs of the first tunnel and the second tunnel is less than or equal to the bandwidth threshold of the first tunnel, and a difference between the downlink one-way delays of the first tunnel and the second tunnel is greater than a first delay threshold, determining that the target transmission mode is the single-tunnel transmission mode; or
when the sum of the throughputs of the first tunnel and the second tunnel is less than or equal to the bandwidth threshold of the first tunnel, and a difference between the downlink one-way delays of the first tunnel and the second tunnel is less than or equal to the first delay threshold, determining that the target transmission mode is the bonding-tunnel transmission mode.

4. The method according to any one of claims 1 to 3, wherein the method further comprises:
determining, by the first network device, the link quality information of the at least one of the first tunnel and the second tunnel.

5. The method according to claim 4, wherein the determining, by the first network device, the link quality information of the at least one of the first tunnel and the second tunnel comprises:

periodically sending, by the first network device, a link quality detection packet to the second network device by using the at least one tunnel;
receiving a link quality detection response packet periodically returned, by using the at least one tunnel, by the second network device; and
determining, by the first network device, the link quality information of the at least one tunnel at least based on the link quality detection response packet.

6. The method according to claim 5, wherein the at least one tunnel comprises the first tunnel, the link quality detection packet comprises a first link quality detection packet sent by the first network device by using the first tunnel, and the first link quality detection packet comprises at least one of the following:

a quantity of packets sent by the first network device by using the first tunnel, a quantity of bytes comprised in the sent packet, and information about a time for sending the first link quality detection packet; and
correspondingly, the link quality detection response packet comprises a first link quality detection response packet returned by the second network device by using the first tunnel, and the first link quality detection response packet comprises at least one of the following:
a quantity of packets received by the second network device by using the first tunnel, a quantity of bytes comprised in the received packet, and information about a time for receiving the first link quality detection packet.

7. A packet transmission method for using in a hybrid access technology, comprising:

receiving, by a second network device, a link quality detection packet periodically sent, by using at least one of a first tunnel and a second tunnel, by a first network device, wherein the first tunnel is a fixed network tunnel, and the second tunnel is a mobile network tunnel; and

periodically returning, by the second network device, a link quality detection response packet to the first network device by using the at least one tunnel, wherein the link quality detection response packet is used by the first network device to determine a target transmission mode for transmitting a service packet to the second network device based on at least one of throughputs, packet loss rates, and downlink one-way delays of the first tunnel and the second tunnel.

8. The method according to claim 7, wherein the at least one tunnel comprises the first tunnel, the link quality detection packet comprises a first link quality detection packet sent by the first network device by using the first tunnel, and the first link quality detection packet comprises at least one of the following:

a quantity of packets sent by the first network device by using the first tunnel, a quantity of bytes comprised in the sent packet, and information about a time for sending the first link quality detection packet; and

the link quality detection response packet comprises a first link quality detection response packet returned by the second network device by using the first tunnel, and the first link quality detection response packet comprises at least one of the following:

a quantity of packets received by the second network device by using the first tunnel, a quantity of bytes comprised in the received packet, and information about a time for receiving the first link quality detection packet.

9. The method according to claim 7 to 8, wherein the at least one tunnel comprises the second tunnel, the link quality detection packet comprises a second link quality detection packet sent by the first network device by using the second tunnel, and the second link quality detection packet comprises at least one of the following:

a quantity of packets sent by the first network device by using the second tunnel, a quantity of bytes comprised in the sent packet, and information about a time for sending the second link quality detection packet; and

the link quality detection response packet comprises a second link quality detection response packet returned by the second network device by using the second tunnel, and the second link quality detection response packet comprises at least one of the following:

a quantity of packets received by the second network device by using the second tunnel, a quantity of bytes comprised in the received packet, and information about a time for receiving the second link quality detection packet.

10. A packet transmission apparatus (500) for using in a hybrid access technology, comprising:

a determining module (510), configured to determine, based on link quality information of at least one of a first tunnel and a second tunnel, a target transmission mode for transmitting a service packet, wherein the target transmission mode is a bonding-tunnel transmission mode or a single-tunnel transmission mode, the bonding-tunnel transmission mode is to transmit a service packet by using the first tunnel and the second tunnel, the single-tunnel transmission mode is to transmit a service packet by using the first tunnel or the second tunnel, the first tunnel is a fixed network tunnel, and the second tunnel is a mobile network tunnel;
a switching module (520), configured to switch a transmission mode currently used for packet transmission to the target transmission mode; and
a communications module (530), configured to transmit a service packet to a second network device by using the target transmission mode;
wherein the determining based on link quality information of at least one of a first tunnel and a second tunnel, a target transmission mode for transmitting a service packet includes: determining the target transmission mode based on at least one of throughputs, packet loss rates, and downlink one-way delays of the first tunnel and the second tunnel.

11. The apparatus (500) according to claim 10, wherein the determining module (510) is further configured to:
determine the link quality information of the at least one of the first tunnel and the second tunnel.

12. The apparatus (500) according to claim 9, wherein the communications module (530) is further configured to:

periodically send a link quality detection packet to the second network device by using the at least one tunnel; and
receive a link quality detection response packet periodically returned, by using the at least one tunnel, by the second network device; and

the determining module (510) is further configured to:
determine the link quality information of the at least one tunnel at least based on the link quality detection response packet.

13. A packet transmission apparatus (600) for using in a hybrid access technology, comprising:
a communications module (610), configured to: receive a link quality detection packet periodically sent, by using at least one of a first tunnel and a second tunnel, by a first network device, and periodically return a link quality detection response packet to the first network device by using the at least one tunnel, wherein the link quality detection response packet is used by the first network device to determine a target transmission mode for transmitting a service packet to the apparatus based on at least one of throughputs, packet loss rates, and downlink one-way delays of the first tunnel and the second tunnel.

14. The apparatus (500) according to claim 13, wherein the at least one tunnel comprises the first tunnel, the link quality detection packet comprises a first link quality detection packet sent by the first network device by using the first tunnel, and the first link quality detection packet comprises at least one of the following:

a quantity of packets sent by the first network device by using the first tunnel, a quantity of bytes comprised in the sent packet, and information about a time for sending the first link quality detection packet; and
the link quality detection response packet comprises a first link quality detection response packet returned by the apparatus by using the first tunnel, and the first link quality detection response packet comprises at least one of the following: a quantity of packets received by the apparatus by using the first tunnel, a quantity of bytes comprised in the received packet, and information about a time for receiving the first link quality detection packet.

15. A packet transmission system (1000), comprising:

the packet transmission apparatus (500) according to any one of claims 10 to 12; and
the packet transmission apparatus (600) according to any one of claims 13 to 14.

**Patentansprüche**

1. Paketübertragungsverfahren zur Verwendung in einer hybriden Zugangstechnologie, umfassend:

Ermitteln, durch eine erste Netzwerkeinrichtung basierend auf Informationen zur Verbindungsqualität eines ersten Tunnels und/oder eines zweiten Tunnels, eines Zielübertragungsmodus zum Übertragen eines Dienstpakets, wobei der Zielübertragungsmodus ein Bonding-Tunnel-Übertragungsmodus oder ein Einzeltunnel-Übertragungsmodus ist, der Bonding-Tunnel-Übertragungsmodus ein Dienstpaket unter Verwendung des ersten Tunnels und des zweiten Tunnels übertragen soll, der Einzeltunnel-Übertragungsmodus ein Dienstpaket unter Verwendung des ersten Tunnels oder des zweiten Tunnels übertragen soll, der erste Tunnel ein Festnetztunnel ist und der zweite Tunnel ein Mobilfunknetz-Tunnel ist;
Umschalten eines aktuell zur Paketübertragung verwendeten Übertragungsmodus durch die erste Netzwerkeinrichtung in den Zielübertragungsmodus; und
Übertragen eines Dienstpakets durch die erste Netzwerkeinrichtung zu einer zweiten Netzwerkeinrichtung unter Verwendung des Zielübertragungsmodus;
wobei das Ermitteln, durch eine erste Netzwerkeinrichtung basierend auf Informationen zur Verbindungsqualität eines ersten Tunnels und/oder eines zweiten Tunnels, eines Zielübertragungsmodus zum Übertragen eines Dienstpakets aufweist: Ermitteln des Zielübertragungsmodus basierend auf mindestens einem von Durchsatzraten, Paketverlustraten und Downlink-Einwegverzögerungen des ersten Tunnels und des zweiten Tunnels.

2. Verfahren nach Anspruch 1, wobei das Ermitteln des Zielübertragungsmodus basierend auf mindestens einem von Durchsatzraten, Paketverlustraten und Downlink-Einwegverzögerungen des ersten Tunnels und des zweiten Tunnels umfasst:

Wenn eine Summe der Durchsatzraten des ersten Tunnels und des zweiten Tunnels größer ist als ein Bandbreiten-Schwellenwert des ersten Tunnels: Feststellen, dass der Zielübertragungsmodus der Bonding-Tunnel-Übertragungsmodus ist; oder
wenn eine Summe der Durchsatzraten des ersten Tunnels und des zweiten Tunnels geringer als ein oder gleich einem Bandbreiten-Schwellenwert des ersten Tunnels ist: Feststellen, dass der Zielübertragungsmodus der Einzeltunnel-Übertragungsmodus ist.

**3.** Verfahren nach Anspruch 1, wobei das Ermitteln des Zielübertragungsmodus basierend auf mindestens einem von Durchsatzraten, Paketverlustraten und Downlink-Einwegverzögerungen des ersten Tunnels und des zweiten Tunnels umfasst:

Wenn die Summe der Durchsatzraten des ersten Tunnels und des zweiten Tunnels geringer als der oder gleich dem Bandbreiten-Schwellenwert des ersten Tunnels ist und eine Differenz zwischen den Downlink-Einwegverzögerungen des ersten Tunnels und des zweiten Tunnels größer ist als ein erster Verzögerungsschwellenwert: Feststellen, dass der Zielübertragungsmodus der Einzeltunnel-Übertragungsmodus ist; oder wenn die Summe der Durchsatzraten des ersten Tunnels und des zweiten Tunnels geringer als der oder gleich dem Bandbreiten-Schwellenwert des ersten Tunnels ist und eine Differenz zwischen den Downlink-Einwegverzögerungen des ersten Tunnels und des zweiten Tunnels geringer als der oder gleich dem ersten Verzögerungsschwellenwert ist: Feststellen, dass der Zielübertragungsmodus der Bonding-Tunnel-Übertragungsmodus ist.

**4.** Verfahren nach einem der Ansprüche 1 bis 3, wobei das Verfahren ferner umfasst: Ermitteln der Informationen zur Verbindungsqualität des ersten Tunnels und/oder des zweiten Tunnels durch die erste Netzwerkeinrichtung.

**5.** Verfahren nach Anspruch 4, wobei das Ermitteln der Informationen zur Verbindungsqualität des ersten Tunnels und/oder des zweiten Tunnels durch die erste Netzwerkeinrichtung umfasst:

periodisches Senden eines Pakets zur Detektion der Verbindungsqualität zu der zweiten Netzwerkeinrichtung durch die erste Netzwerkeinrichtung unter Verwendung des mindestens einen Tunnels; Empfangen eines periodisch zurückgeleiteten Antwortpakets zur Detektion der Verbindungsqualität durch die zweite Netzwerkeinrichtung unter Verwendung des mindestens einen Tunnels; und Ermitteln der Informationen zur Verbindungsqualität des mindestens einen Tunnels durch die erste Netzwerkeinrichtung, basierend auf dem Antwortpaket zur Detektion der Verbindungsqualität.

**6.** Verfahren nach Anspruch 5, wobei der mindestens eine Tunnel den ersten Tunnel umfasst, das Paket zur Detektion der Verbindungsqualität ein von der ersten Netzwerkeinrichtung unter Verwendung des ersten Tunnels gesendetes Paket zur Detektion der Qualität der ersten Verbindung umfasst, und das Paket zur Detektion der Qualität der ersten Verbindung mindestens eines der Folgenden umfasst:

eine Menge von durch die erste Netzwerkeinrichtung unter Verwendung des ersten Tunnels gesendeten Paketen, eine Menge von in dem gesendeten Paket umfassten Bytes, und Informationen zu einem Zeitpunkt zum Senden des Pakets zur Detektion der Qualität der ersten Verbindung; und dementsprechend das Antwortpaket zur Detektion der Verbindungsqualität ein durch die zweite Netzwerkeinrichtung unter Verwendung des ersten Tunnels zurückgeleitetes Antwortpaket zur Detektion der Qualität der ersten Verbindung umfasst, und das Antwortpaket zur Detektion der Qualität der ersten Verbindung mindestens eines der Folgenden umfasst: eine Menge von durch die zweite Netzwerkeinrichtung unter Verwendung des ersten Tunnels empfangenen Paketen, eine Menge von in dem empfangenen Paket umfassten Bytes, und Informationen zu einem Zeitpunkt zum Empfangen des Pakets zur Detektion der Qualität der ersten Verbindung.

**7.** Paketübertragungsverfahren zur Verwendung in einer hybriden Zugangstechnologie, umfassend: Empfangen eines periodisch gesendeten Pakets zur Detektion der Verbindungsqualität durch eine zweite Netzwerkeinrichtung unter Verwendung eines ersten Tunnels und/oder eines zweiten Tunnels durch eine erste Netzwerkeinrichtung, wobei der erste Tunnel ein Festnetztunnel ist und der zweite Tunnel ein Mobilfunknetz-Tunnel ist; und periodisches Zurückleiten eines Antwortpakets zur Detektion der Verbindungsqualität durch die zweite Netzwerkeinrichtung zu der ersten Netzwerkeinrichtung unter Verwendung des mindestens einen Tunnels, wobei das Antwortpaket zur Detektion der Verbindungsqualität durch die erste Netzwerkeinrichtung verwendet wird, um einen Zielübertragungsmodus zum Übertragen eines Dienstpakets zu der zweiten Netzwerkeinrichtung zu ermitteln, basierend auf mindestens einem von Durchsatzraten, Paketverlustraten und Downlink-Einwegverzögerungen des ersten Tunnels und des zweiten Tunnels.

**8.** Verfahren nach Anspruch 7, wobei der mindestens eine Tunnel den ersten Tunnel umfasst, das Paket zur Detektion der Verbindungsqualität ein von der ersten Netzwerkeinrichtung unter Verwendung des ersten Tunnels gesendetes Paket zur Detektion der Qualität der ersten Verbindung umfasst, und das Paket zur Detektion der Qualität der ersten Verbindung mindestens eines der Folgenden umfasst:

eine Menge von durch die erste Netzwerkeinrichtung unter Verwendung des ersten Tunnels gesendeten Paketen, eine Menge von in dem gesendeten Paket umfassten Bytes, und Informationen zu einem Zeitpunkt zum Senden des Pakets zur Detektion der Qualität der ersten Verbindung; und

das Antwortpaket zur Detektion der Verbindungsqualität ein durch die zweite Netzwerkeinrichtung unter Verwendung des ersten Tunnels zurückgeleitetes Antwortpaket zur Detektion der Qualität der ersten Verbindung umfasst, und das Antwortpaket zur Detektion der Qualität der ersten Verbindung mindestens eines der Folgenden umfasst:

eine Menge von durch die zweite Netzwerkeinrichtung unter Verwendung des ersten Tunnels empfangenen Paketen, eine Menge von in dem empfangenen Paket umfassten Bytes, und Informationen zu einem Zeitpunkt zum Empfangen des Pakets zur Detektion der Qualität der ersten Verbindung.

9. Verfahren nach Anspruch 7 bis 8, wobei der mindestens eine Tunnel den zweiten Tunnel umfasst, das Paket zur Detektion der Verbindungsqualität ein von der ersten Netzwerkeinrichtung unter Verwendung des zweiten Tunnels gesendetes Paket zur Detektion der Qualität der zweiten Verbindung umfasst, und das Paket zur Detektion der Qualität der zweiten Verbindung mindestens eines der Folgenden umfasst:

eine Menge von durch die erste Netzwerkeinrichtung unter Verwendung des zweiten Tunnels gesendeten Paketen, eine Menge von in dem gesendeten Paket umfassten Bytes, und Informationen zu einem Zeitpunkt zum Senden des Pakets zur Detektion der Qualität der zweiten Verbindung; und

das Antwortpaket zur Detektion der Verbindungsqualität ein durch die zweite Netzwerkeinrichtung unter Verwendung des zweiten Tunnels zurückgeleitetes Antwortpaket zur Detektion der Qualität der zweiten Verbindung umfasst, und das Antwortpaket zur Detektion der Qualität der zweiten Verbindung mindestens eines der Folgenden umfasst:

eine Menge von durch die zweite Netzwerkeinrichtung unter Verwendung des zweiten Tunnels empfangenen Paketen, eine Menge von in dem empfangenen Paket umfassten Bytes, und Informationen zu einem Zeitpunkt zum Empfangen des Pakets zur Detektion der Qualität der zweiten Verbindung.

10. Paketübertragungsvorrichtung (500) zur Verwendung in einer hybriden Zugangstechnologie, umfassend:

ein Bestimmungsmodul (510), ausgelegt zum Ermitteln, basierend auf Informationen zur Verbindungsqualität eines ersten Tunnels und/oder eines zweiten Tunnels, eines Zielübertragungsmodus zum Übertragen eines Dienstpakets, wobei der Zielübertragungsmodus ein Bonding-Tunnel-Übertragungsmodus oder ein Einzeltunnel-Übertragungsmodus ist, der Bonding-Tunnel-Übertragungsmodus ein Dienstpaket unter Verwendung des ersten Tunnels und des zweiten Tunnels übertragen soll, der Einzeltunnel-Übertragungsmodus ein Dienstpaket unter Verwendung des ersten Tunnels oder des zweiten Tunnels übertragen soll, der erste Tunnel ein Festnetztunnel ist und der zweite Tunnel ein Mobilfunknetz-Tunnel ist;

ein Schaltmodul (520), ausgelegt zum Umschalten eines aktuell zur Paketübertragung verwendeten Übertragungsmodus in den Zielübertragungsmodus; und

ein Kommunikationsmodul (530), ausgelegt zum Übertragen eines Dienstpakets zu einer zweiten Netzwerkeinrichtung unter Verwendung des Zielübertragungsmodus;

wobei das Ermitteln, basierend auf Informationen zur Verbindungsqualität eines ersten Tunnels und/oder eines zweiten Tunnels, eines Zielübertragungsmodus zum Übertragen eines Dienstpakets aufweist: Ermitteln des Zielübertragungsmodus basierend auf mindestens einem von Durchsatzraten, Paketverlustraten und Downlink-Einwegverzögerungen des ersten Tunnels und des zweiten Tunnels.

11. Vorrichtung (500) nach Anspruch 10, wobei das Bestimmungsmodul (510) ferner ausgelegt ist zum:
Ermitteln von Informationen zur Verbindungsqualität des ersten Tunnels und/oder des zweiten Tunnels.

12. Vorrichtung (500) nach Anspruch 9, wobei das Kommunikationsmodul (530) ferner ausgelegt ist zum:

periodischen Senden eines Pakets zur Detektion der Verbindungsqualität zu der zweiten Netzwerkeinrichtung unter Verwendung des mindestens einen Tunnels; und

Empfangen eines periodisch zurückgeleiteten Antwortpakets zur Detektion der Verbindungsqualität durch die zweite Netzwerkeinrichtung unter Verwendung des mindestens einen Tunnels; und

das Bestimmungsmodul (510) ferner ausgelegt ist zum:

Ermitteln der Informationen zur Verbindungsqualität des mindestens einen Tunnels, basierend auf dem Antwortpaket zur Detektion der Verbindungsqualität.

13. Paketübertragungsvorrichtung (600) zur Verwendung in einer hybriden Zugangstechnologie, umfassend:
ein Kommunikationsmodul (610), ausgelegt zum Empfangen eines periodisch gesendeten Pakets zur Detektion der Verbindungsqualität unter Verwendung eines ersten Tunnels und/oder eines zweiten Tunnels durch eine erste Netzwerkeinrichtung, und zum periodischen Zurückleiten eines Antwortpakets zur Detektion der Verbindungsqualität zu der ersten Netzwerkeinrichtung unter Verwendung des mindestens einen Tunnels, wobei das Antwortpaket zur Detektion der Verbindungsqualität durch die erste Netzwerkeinrichtung verwendet wird, um einen Zielübertragungsmodus zum Übertragen eines Dienstpakets zu der Vorrichtung zu ermitteln, basierend auf mindestens einem von Durchsatzraten, Paketverlustraten und Downlink-Einwegverzögerungen des ersten Tunnels und des zweiten Tunnels.

14. Vorrichtung (500) nach Anspruch 13, wobei der mindestens eine Tunnel den ersten Tunnel umfasst, das Paket zur Detektion der Verbindungsqualität ein von der ersten Netzwerkeinrichtung unter Verwendung des ersten Tunnels gesendetes Paket zur Detektion der Qualität der ersten Verbindung umfasst, und das Paket zur Detektion der Qualität der ersten Verbindung mindestens eines der Folgenden umfasst:

eine Menge von durch die erste Netzwerkeinrichtung unter Verwendung des ersten Tunnels gesendeten Paketen, eine Menge von in dem gesendeten Paket umfassten Bytes, und Informationen zu einem Zeitpunkt zum Senden des Pakets zur Detektion der Qualität der ersten Verbindung; und
das Antwortpaket zur Detektion der Verbindungsqualität ein durch die Vorrichtung unter Verwendung des ersten Tunnels zurückgeleitetes Antwortpaket zur Detektion der Qualität der ersten Verbindung umfasst, und das Antwortpaket zur Detektion der Qualität der ersten Verbindung mindestens eines der Folgenden umfasst:
eine Menge von durch die Vorrichtung unter Verwendung des ersten Tunnels empfangenen Paketen, eine Menge von in dem empfangenen Paket umfassten Bytes, und Informationen zu einem Zeitpunkt zum Empfangen des Pakets zur Detektion der Qualität der ersten Verbindung.

15. Paketübertragungssystem (1000), umfassend:
die Paketübertragungsvorrichtung (500) nach einem der Ansprüche 10 bis 12; und die Paketübertragungsvorrichtung (600) nach einem der Ansprüche 13 bis 14.

**Revendications**

1. Procédé de transmission de paquet pour l'utilisation dans une technologie d'accès hybride, comprenant :

la détermination, par un premier dispositif de réseau, sur la base d'informations de qualité de liaison d'au moins un parmi un premier tunnel et un second tunnel, d'un mode de transmission cible pour transmettre un paquet de service, dans lequel le mode de transmission cible est un mode de transmission par tunnel lié ou un mode de transmission par tunnel unique, le mode de transmission par tunnel lié est destiné à transmettre un paquet de service en utilisant le premier tunnel et le second tunnel, le mode de transmission par tunnel unique est destiné à transmettre un paquet de service en utilisant le premier tunnel ou le second tunnel, le premier tunnel est un tunnel de réseau fixe, et le second tunnel est un tunnel de réseau mobile ;
la commutation, par le premier dispositif de réseau, d'un mode de transmission, actuellement utilisé pour la transmission de paquet, au mode de transmission cible ; et
la transmission, par le premier dispositif de réseau, d'un paquet de service à un second dispositif de réseau en utilisant le mode de transmission cible ;
dans lequel la détermination, par un premier dispositif de réseau, sur la base d'informations de qualité de liaison d'au moins un parmi un premier tunnel et un second tunnel, d'un mode de transmission cible pour transmettre un paquet de service inclut : la détermination du mode de transmission cible sur la base d'au moins un parmi des débits, des taux de perte de paquet, et des temps de propagation dans un seul sens en liaison descendante du premier tunnel et du second tunnel.

2. Procédé selon la revendication 1, dans lequel la détermination du mode de transmission cible sur la base d'au moins un parmi des débits, des taux de perte de paquet, et des temps de propagation dans un seul sens en liaison descendante du premier tunnel et du second tunnel inclut :

lorsqu'une somme des débits du premier tunnel et du second tunnel est supérieure à un seuil de largeur de bande du premier tunnel, la détermination que le mode de transmission cible est le mode de transmission par tunnel lié ; ou

lorsqu'une somme des débits du premier tunnel et du second tunnel est inférieure ou égale à un seuil de largeur de bande du premier tunnel, la détermination que le mode de transmission cible est le mode de transmission par tunnel unique.

3. Procédé selon la revendication 1, dans lequel la détermination du mode de transmission cible sur la base d'au moins un parmi des débits, des taux de perte de paquet, et des temps de propagation dans un seul sens en liaison descendante du premier tunnel et du second tunnel inclut :

lorsque la somme des débits du premier tunnel et du second tunnel est inférieure ou égale au seuil de largeur de bande du premier tunnel, et qu'une différence entre les temps de propagation dans un seul sens en liaison descendante du premier tunnel et du second tunnel est supérieure à un premier seuil de temps de propagation, la détermination que le mode de transmission cible est le mode de transmission par tunnel unique ; ou

lorsque la somme des débits du premier tunnel et du second tunnel est inférieure ou égale au seuil de largeur de bande du premier tunnel, et qu'une différence entre les temps de propagation dans un seul sens en liaison descendante du premier tunnel et du second tunnel est inférieure ou égale au premier seuil de temps de propagation, la détermination que le mode de transmission cible est le mode de transmission par tunnel lié.

4. Procédé selon l'une quelconque des revendications 1 à 3, dans lequel le procédé comprend en outre :
la détermination, par le premier dispositif de réseau, des informations de qualité de liaison de l'au moins un parmi le premier tunnel et le second tunnel.

5. Procédé selon la revendication 4, dans lequel la détermination, par le premier dispositif de réseau, des informations de qualité de liaison de l'au moins un parmi le premier tunnel et le second tunnel comprend :

l'envoi périodique, par le premier dispositif de réseau, d'un paquet de détection de qualité de liaison au second dispositif de réseau en utilisant l'au moins un tunnel ;

la réception d'un paquet de réponse de détection de qualité de liaison périodiquement renvoyé, en utilisant l'au moins un tunnel, par le second dispositif de réseau ; et

la détermination, par le premier dispositif de réseau, des informations de qualité de liaison de l'au moins un tunnel au moins sur la base du paquet de réponse de détection de qualité de liaison.

6. Procédé selon la revendication 5, dans lequel l'au moins un tunnel comprend le premier tunnel, le paquet de détection de qualité de liaison comprend un premier paquet de détection de qualité de liaison envoyé par le premier dispositif de réseau en utilisant le premier tunnel, et le premier paquet de détection de qualité de liaison comprend au moins un parmi ce qui suit :

une quantité de paquets envoyés par le premier dispositif de réseau en utilisant le premier tunnel, une quantité d'octets compris dans le paquet envoyé, et des informations concernant un temps pour envoyer le premier paquet de détection de qualité de liaison ; et

de façon correspondante, le paquet de réponse de détection de qualité de liaison comprend un premier paquet de réponse de détection de qualité de liaison renvoyé par le second dispositif de réseau en utilisant le premier tunnel, et le premier paquet de réponse de détection de qualité de liaison comprend au moins un parmi ce qui suit : une quantité de paquets reçus par le second dispositif de réseau en utilisant le premier tunnel, une quantité d'octets compris dans le paquet reçu, et des informations concernant un temps pour recevoir le premier paquet de détection de qualité de liaison.

7. Procédé de transmission de paquet pour l'utilisation dans une technologie d'accès hybride, comprenant :

la réception, par un second dispositif de réseau, d'un paquet de détection de qualité de liaison périodiquement envoyé, en utilisant au moins un parmi un premier tunnel et un second tunnel, par un premier dispositif de réseau, dans lequel le premier tunnel est un tunnel de réseau fixe, et le second tunnel est un tunnel de réseau mobile ; et

le renvoi périodique, par le second dispositif de réseau, d'un paquet de réponse de détection de qualité de liaison, au premier dispositif de réseau, en utilisant l'au moins un tunnel, dans lequel le paquet de réponse de détection de qualité de liaison est utilisé par le premier dispositif de réseau pour déterminer un mode de transmission cible pour transmettre un paquet de service au second dispositif de réseau sur la base d'au moins un parmi des débits, des taux de perte de paquet, et des temps de propagation dans un seul sens en liaison descendante du premier tunnel et du second tunnel.

8. Procédé selon la revendication 7, dans lequel l'au moins un tunnel comprend le premier tunnel, le paquet de détection de qualité de liaison comprend un premier paquet de détection de qualité de liaison envoyé par le premier dispositif de réseau en utilisant le premier tunnel, et le premier paquet de détection de qualité de liaison comprend au moins un parmi ce qui suit :

une quantité de paquets envoyés par le premier dispositif de réseau en utilisant le premier tunnel, une quantité d'octets compris dans le paquet envoyé, et des informations concernant un temps pour envoyer le premier paquet de détection de qualité de liaison ; et
le paquet de réponse de détection de qualité de liaison comprend un premier paquet de réponse de détection de qualité de liaison renvoyé par le second dispositif de réseau en utilisant le premier tunnel, et le premier paquet de réponse de détection de qualité de liaison comprend au moins un parmi ce qui suit :
une quantité de paquets reçus par le second dispositif de réseau en utilisant le premier tunnel, une quantité d'octets compris dans le paquet reçu, et des informations concernant un temps pour recevoir le premier paquet de détection de qualité de liaison.

9. Procédé selon la revendication 7 et 8, dans lequel l'au moins un tunnel comprend le second tunnel, le paquet de détection de qualité de liaison comprend un second paquet de détection de qualité de liaison envoyé par le premier dispositif de réseau en utilisant le second tunnel, et le second paquet de détection de qualité de liaison comprend au moins un parmi ce qui suit :

une quantité de paquets envoyés par le premier dispositif de réseau en utilisant le second tunnel, une quantité d'octets compris dans le paquet envoyé, et des informations concernant un temps pour envoyer le second paquet de détection de qualité de liaison ; et
le paquet de réponse de détection de qualité de liaison comprend un second paquet de réponse de détection de qualité de liaison renvoyé par le second dispositif de réseau en utilisant le second tunnel, et le second paquet de réponse de détection de qualité de liaison comprend au moins un parmi ce qui suit :
une quantité de paquets reçus par le second dispositif de réseau en utilisant le second tunnel, une quantité d'octets compris dans le paquet reçu, et des informations concernant un temps pour recevoir le second paquet de détection de qualité de liaison.

10. Appareil de transmission de paquet (500) pour l'utilisation dans une technologie d'accès hybride, comprenant :

un module de détermination (510), configuré pour déterminer, sur la base d'informations de qualité de liaison d'au moins un parmi un premier tunnel et un second tunnel, un mode de transmission cible pour transmettre un paquet de service, dans lequel le mode de transmission cible est un mode de transmission par tunnel lié ou un mode de transmission par tunnel unique, le mode de transmission par tunnel lié est destiné à transmettre un paquet de service en utilisant le premier tunnel et le second tunnel, le mode de transmission par tunnel unique est destiné à transmettre un paquet de service en utilisant le premier tunnel ou le second tunnel, le premier tunnel est un tunnel de réseau fixe, et le second tunnel est un tunnel de réseau mobile ;
un module de commutation (520), configuré pour commuter un mode de transmission, actuellement utilisé pour la transmission de paquet, au mode de transmission cible ; et
un module de communication (530), configuré pour transmettre un paquet de service à un second dispositif de réseau en utilisant le mode de transmission cible ;
dans lequel la détermination, sur la base d'informations de qualité de liaison d'au moins un parmi un premier tunnel et un second tunnel, d'un mode de transmission cible pour transmettre un paquet de service inclut : la détermination du mode de transmission cible sur la base d'au moins un parmi des débits, des taux de perte de paquet, et des temps de propagation dans un seul sens en liaison descendante du premier tunnel et du second tunnel.

11. Appareil (500) selon la revendication 10, dans lequel le module de détermination (510) est en outre configuré pour :
déterminer les informations de qualité de liaison de l'au moins un parmi le premier tunnel et le second tunnel.

12. Appareil (500) selon la revendication 9, dans lequel le module de communication (530) est en outre configuré pour :

périodiquement envoyer un paquet de détection de qualité de liaison au second dispositif de réseau en utilisant l'au moins un tunnel ; et

recevoir un paquet de réponse de détection de qualité de liaison périodiquement renvoyé, en utilisant l'au moins un tunnel, par le second dispositif de réseau ; et

le module de détermination (510) est en outre configuré pour :

déterminer les informations de qualité de liaison de l'au moins un tunnel au moins sur la base du paquet de réponse de détection de qualité de liaison.

**13.** Appareil de transmission de paquet (600) pour l'utilisation dans une technologie d'accès hybride, comprenant :

un module de communication (610), configuré pour : recevoir un paquet de détection de qualité de liaison périodiquement envoyé, en utilisant au moins un parmi un premier tunnel et un second tunnel, par un premier dispositif de réseau, et périodiquement renvoyer un paquet de réponse de détection de qualité de liaison au premier dispositif de réseau en utilisant l'au moins un tunnel, dans lequel le paquet de réponse de détection de qualité de liaison est utilisé par le premier dispositif de réseau pour déterminer un mode de transmission cible pour transmettre un paquet de service à l'appareil sur la base d'au moins un parmi des débits, des taux de perte de paquet, et des temps de propagation dans un seul sens en liaison descendante du premier tunnel et du second tunnel.

**14.** Appareil (500) selon la revendication 13, dans lequel l'au moins un tunnel comprend le premier tunnel, le paquet de détection de qualité de liaison comprend un premier paquet de détection de qualité de liaison envoyé par le premier dispositif de réseau en utilisant le premier tunnel, et le premier paquet de détection de qualité de liaison comprend au moins un parmi ce qui suit :

une quantité de paquets envoyés par le premier dispositif de réseau en utilisant le premier tunnel, une quantité d'octets compris dans le paquet envoyé, et des informations concernant un temps pour envoyer le premier paquet de détection de qualité de liaison ; et

le paquet de réponse de détection de qualité de liaison comprend un premier paquet de réponse de détection de qualité de liaison renvoyé par l'appareil en utilisant le premier tunnel, et le premier paquet de réponse de détection de qualité de liaison comprend au moins un parmi ce qui suit :

une quantité de paquets reçus par l'appareil en utilisant le premier tunnel, une quantité d'octets compris dans le paquet reçu, et des informations concernant un temps pour recevoir le premier paquet de détection de qualité de liaison.

**15.** Système de transmission de paquet (1000), comprenant :

l'appareil de transmission de paquet (500) selon l'une quelconque des revendications 10 à 12 ; et
l'appareil de transmission de paquet (600) selon l'une quelconque des revendications 13 et 14.

LTE tunnel

HG device

User side

DSL tunnel

HAAP device

Network side

## FIG. 1

HAAP device

HG device

Transmit a service packet based
on a source transmission mode

S201

Determine link quality
information

S202

Determine the target
transmission mode based on
the link quality information

S203

Transmit the service packet based
on a target transmission mode

S204

## FIG. 2

HAAP device

HG device

S301. First packet (TX1, TX_BYTE1, $T_0$)

$T_0$ → $T_4$

S302. First response packet (RX1, RX_BYTE1, $T_4$)

$T_1$ ← $T_5$

S303. Second packet (TX2, TX_BYTE2, $T_2$)

$T_2$ → $T_6$

S304. Second response packet (RX2, RX_BYTE2, $T_6$)

$T_3$ ← $T_7$

FIG. 3

Punishment state

Switching condition 5

Switching condition 2

Switching condition 3

Transitive state

Switching condition 1

Binding state

Switching condition 4

FIG. 4

Apparatus 500

Determining module 510 — Switching module 520 — Communications module 530

FIG. 5

Apparatus 600

Communications module 610

FIG. 6

Apparatus 700

Transceiver 710

Processor 720

Memory 730

FIG. 7

FIG. 8

Apparatus 900

Main control
board 910 | Central processing unit 911

Interface board 930

Central
processing
unit 931

Forwarding
entry
memory
934

Physical interface
card 933

Network
processor 932

Switching
board 920

Interface board 940

Central
processing
unit 941

Forwarding
entry
memory
944

Physical interface
card 943

Network
processor 942

FIG. 9

System 1000

Apparatus 1010 | Apparatus 1020

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016090978 A1

**Non-patent literature cited in the description**

- Huawei's GRE Tunnel Bonding Protocol; rfc8157.txt. **LEYMANN C HEIDEMANN ; M ZHANG ; B SARIKAYA ; M CULLEN.** HUAWEI'S GRE TUNNEL BONDING PROTOCOL; RFC8157.TXT, INTERNET ENGINEERING TASK FORCE, IETF. STANDARD, INTERNET SOCIETY (ISOC), 06 May 2017, 1-44